(19)

Europäisches
Patentamt
European
Patent Office
Office européen
des brevets

(11) **EP 2 373 034 A1**

(12) **EUROPEAN PATENT APPLICATION**
published in accordance with Art. 153(4) EPC

(43) Date of publication:
**05.10.2011 Bulletin 2011/40**

(51) Int Cl.:
**H04N 7/32** *(2006.01)*

(21) Application number: **09831774.6**

(22) Date of filing: **28.10.2009**

(86) International application number:
**PCT/JP2009/068458**

(87) International publication number:
**WO 2010/067668 (17.06.2010 Gazette 2010/24)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.12.2008 JP 2008312295**

(71) Applicant: **Sharp Kabushiki Kaisha
Osaka-shi, Osaka 545-8522 (JP)**

(72) Inventor: **YAMAMOTO, Tomoyuki
Osaka-shi
Osaka 545-8522 (JP)**

(74) Representative: **Müller - Hoffmann & Partner
Patentanwälte
Innere Wiener Strasse 17
81667 München (DE)**

(54) **IMAGE ENCODER AND IMAGE DECODER**

(57)     A division mode adapted to the characteristic of an image is enabled to be selected from among a plurality of the division modes while suppressing an increase in side information. An image encoder (1) divides an input image into a plurality of macro blocks and performs encoding processing in units of macro blocks. The image encoder (1) is provided with a prediction mode assessment portion (148) for assessing a prediction mode indicating a method of generating a prediction image for each of the macro-blocks, a division mode determination portion (149) for determining a division mode indicating a method of division into sub-macro blocks for each of the macro blocks according to the prediction modes assessed by the prediction mode assessment portion (148), an SMB division portion (140) for dividing the macro blocks into the sub-macro blocks on the basis of the division modes determined by the division mode determination portion (149), and a prediction portion (141) for generating the prediction images of the macro blocks on the basis of the prediction modes assessed by the prediction mode assessment portion (148), and frequency-converts the difference between the input image and the prediction images in units of sub-macro blocks.

FIG. 3

**Description**

TECHNICAL FIELD

The present invention relates to an image encoder and an image decoder and more specifically to an image encoder that creates coded data by coding an image and an image decoder that decodes the coded data that is transmitted and accumulated to obtain the image.

BACKGROUND ART

In ordinary image coding, coded data is created by dividing an input image to be coded into predetermined processing units that are referred to as "macro blocks (hereinafter, "MBs") and executing a coding process for each of the MBs. In image decoding, a decoded image is created by extracting pieces of MB coded data that are the pieces of coded data corresponding to MBs from the coded data to be decoded, sequentially decoding the pieces of MB coded data, and collecting MB decoded images acquired.

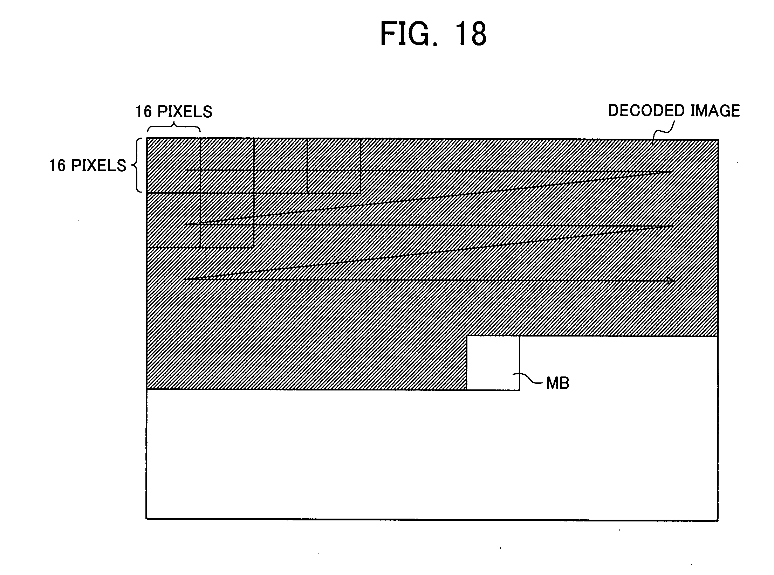

As depicted in Fig. 18, an image is divided into square MBs each having a specific size (such as 16 pixels×16 pixels) and the MBs are processed in order of raster scanning according to which scanning is executed in an image from the upper left to the lower right, as the sequence of processing the MBs.

The MBs are each divided into sub-macro blocks (hereinafter, "SMBs") that are yet smaller processing units, corresponding to the property of the input image in each MB (MB image). For each SMB, an estimated image is created that is estimative of an input image in the SMB (SMB image). An estimation residual difference that is the difference between the SMB image and the estimated image is encoded after being transformed using frequency transformation that is represented by discrete cosine transformation (DCT).

When an image coding process (hereinafter, "conventional technique") is executed, a moving image encoder based on the description in Non-Patent Literature 1 can switch for each MB a method for SMB division (division modes) and a methods of creating estimated images (estimation modes). Division modes and estimation modes in the conventional technique will be described.

In the conventional technique, MBs each having 16×16 pixels are used. Order of raster scanning is generally used as MB scanning. Hereinafter, to simplify the description, MBs each having 16×16 pixels and order of raster scanning as order for MB scanning will be employed unless especially mentioned.

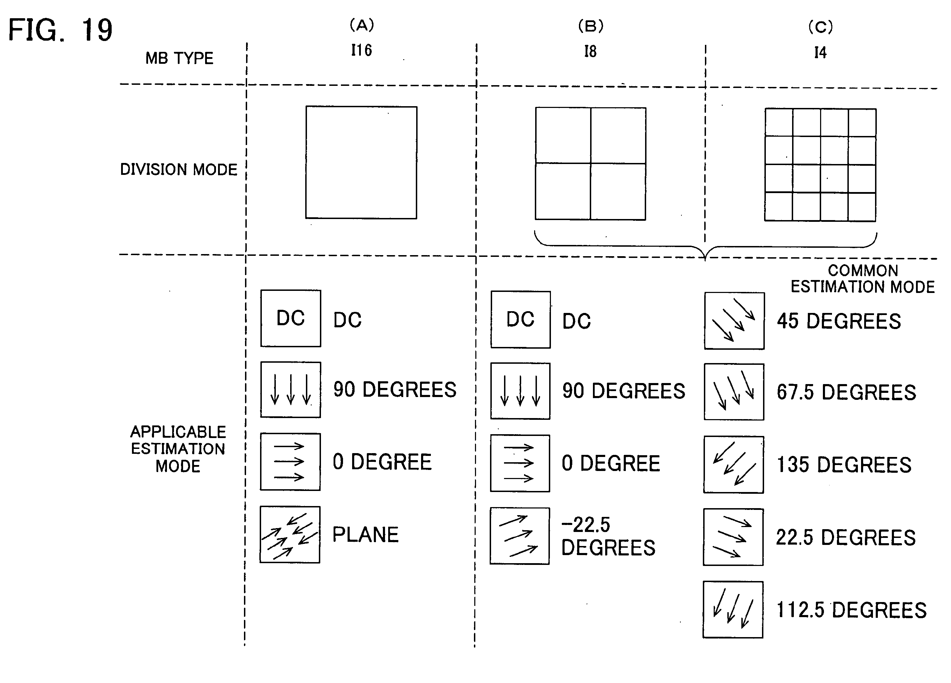

MBs are classified into three MB types of I16, I8, and I4 according to the division mode applied with. Figs. 19 depict the division modes that are applied to the MB types. Fig. 19 (A) depicts an example of the I16 type. Fig. 19(B) depicts an example of the I8 type. Fig. 19(C) depicts an example of the I4 type. No division is executed for the I16 type. An MB coincides with an SMB. For the I8 type, each MB is divided into four SMBs each consisting of 8×8 pixels. For the I4 type, an MB is divided into 16 SMBs each consisting of 4x4 pixels.

An estimation mode that is applicable to SMBs differs depending on the type of MBs. Figs. 19 depict kinds of estimation mode that are applicable to the types of MB. To the I16 type, four modes of an average value mode, a zero-degree, a 90-degree, and a plane modes are applicable. To the I8 and the I4 types, nine modes of the average value mode, the zero-degree, the 90-degree, a 45-degree, a 22.5-degree, a 67.5-degree, a -22.5-degree, a 112.5-degree, and a 135-degree modes are applicable. In the above, an "X degree" is an angle acquired when a direction to the right is taken as zero degree and a clockwise direction is taken as the positive direction. In an X-degree estimation mode, an estimated image is created using the spatial correlation between images in the direction indicated by the angle.

In the conventional technique, the various division modes and the various estimation modes as above can be selected according to the property of an MB image. Thereby, the absolute value of each estimation residual difference can be reduced and the energy of the estimation residual differences can be concentrated on some of transformation coefficients using the frequency transformation. Therefore, an input image can be coded with a little amount of codes.

The "energy of the estimation residual differences" as a physical quantity corresponds to the sum of squares of the values of the estimation residual differences for pixels. The reason is as follows why the amount of codes of the estimation residual differences is reduced by concentrating this "energy of the estimation residual differences" on some of the transformation coefficients.

(1) In coding an image, transformation coefficient levels that are acquired by quantizing transformation coefficients are variable-length-coded.

(2)When the transformation coefficient levels in a block are variable-length-coded, the amount of codes in coded data after the variable-length-coding becomes smaller as transformation coefficient levels each having a value of zero increases.

(3)The grounds for the above (2) can be that a scheme of collectively expressing a plurality of transformation coefficient levels each having a value of zero as a short bit string is used in the variable-length-coding.

(4)By concentrating the "energy of the estimation residual differences" on some of the transformation coefficients, the energy that is retained by the other many transformation coefficients becomes relatively small.

(5)As to a transformation coefficient having a small amount of energy, the value of the absolute value of its transformation coefficient is small. Therefore, the possibility becomes high that the corresponding transformation coefficient level becomes zero due to the quantization.

(6) From the above (4) and (5), it can be seen that, by concentrating the "energy of the estimation residual differences" on some of the transformation coefficients, the possibility becomes high that the transformation coefficient level becomes zero for each of more transformation coefficients.

(7)Therefore, from the above (2) and (6), it can be seen that, by concentrating the "energy of the estimation residual differences" on some of the transformation coefficients, the possibility becomes high that the amount of codes of the coded data after the variable-length-coding is reduced.

(8)As to one block, a conclusion is derived that the possibility becomes high that the amount of codes is reduced. However, an image is configured by many blocks and, therefore, the amount of codes is reduced as the whole image.

PRIOR ART DOCUMENT

NON-PATENT LITERATURE

Non-Patent Literature 1: ITU-T Recommendation H.264(11/07) URL http://www.itu.int/rec/T-REC-H.264-200711-S/en

SUMMARY OF THE INVENTION

PROBLEMS TO BE SOLVED BY THE INVENTION

However, in the conventional technique, only predetermined three kinds of division modes are present and, therefore, a problem arises that a division mode that is suitable for the property of MB images can not always be selected. This problem will be described in more detail as follows.

The estimation residual difference is frequency transformed for each SMB. However, in this case, preferably, the energy of the estimation residual differences is concentrated on as few frequency coefficients as possible as the result of the frequency transformation, to code the estimation residual differences using a smaller amount of codes. Generally, for a signal having the spatial correlation over a wide range, the energy can be concentrated on a few frequency coefficients by frequency-transforming for each wide unit. In contrast, when frequency transformation is executed for each wide unit for a signal that has the spatial correlation only in a narrow range, the energy is dispersed to many frequency coefficients. Therefore, preferably, the transformation block size is selected according to the spatial correlation of the signal to be transformed. Taking this point into consideration, frequency transformation executed in each of a plurality of different kinds of unit is available in the conventional technique.

However, the kinds of units of the frequency transformation of the conventional technique are $16\times16$ pixels, $8\times8$ pixels, and $4\times4$ pixels and, for example, kinds of units such as $16\times4$ pixels and $4\times16$ pixels are not available. When the spatial correlation of the estimation residual differences is high in the lateral direction and is low in the longitudinal direction, frequency transformation for each $16\times4$ pixels is effective. Similarly, when the spatial correlation of the estimation residual differences is high in the longitudinal direction and is low in the lateral direction, frequency transformation for each $4\times16$ pixels is effective. In the conventional technique, frequency transformation in such units is not applicable and, therefore, a problem arises that the energy does not concentrate on a satisfyingly few frequency coefficients when estimation residual differences having a specific spatial correlation property are frequency-transformed.

A method of increasing the number of division modes that are applicable to MBs can be considered as a solution of the problem. However, each of the division modes needs to be coded as side information for each MB. Therefore, when the number of applicable division modes is increased, a new problem arises that the amount increases of codes of the side information that indicates which division mode is applied with.

The present invention was conceived in view of the above circumstances and an object thereof is to provide an image encoder that enables coding of an input image using an amount of codes that is smaller than that of the conventional technique by selecting a division mode that is suitable for a local property of the input image from many division modes without increasing side information.

Another object of the present invention is to provide an image decoder that is able to decode coded data coded by the image encoder.

MEANS FOR SOLVING THE PROBLEMS

To solve the problems, a first technical means is an image encoder that divides an input image into a plurality of macro blocks and executes a coding process for each macro block, comprising an estimation mode determining portion that determines an estimation mode indicating a method for creating an estimated image for each macro block; a division mode determining portion that determines a division mode indicating a method for dividing into sub-macro blocks for each macro block corresponding to the estimation mode determined by the estimation mode determining portion; an SMB dividing portion that divides a macro block into sub-macro blocks based on the division mode determined by the division mode determining portion; and an estimating portion that creates an estimated image of a macro block based on the estimation mode determined by the estimation mode determining portion, wherein a difference between the input image and the estimated image is frequency-transformed for each sub-macro block.

A second technical means is the image encoder of the first technical means, wherein the estimating portion creates the estimated image of the macro block for each sub-macro block.

A third technical means is the image encoder of the first or the second technical means comprising an SMB division rule creating portion that creates an SMB division rule correlating each estimation mode with a suitable division mode, wherein the division mode determining portion determines a division mode that corresponds to the estimation mode determined by the estimation mode determining portion, according to the SMB division rule.

A fourth technical means is the image encoder of the third technical means, wherein the SMB division rule is encoded.

A fifth technical means is the image encoder of the fourth technical means, wherein the SMB division rule is encoded for each slice.

A sixth technical means is the image encoder of any one of the third to the fifth technical means, further comprising a VLC portion that codes the input image for each macro block, wherein the SMB division rule includes an effective division mode list that corresponds to each estimation mode, the effective division mode list includes as its element (s) at least one or more division mode(s) that is(are) effective for the corresponding estimation mode, the division mode determining portion extracts from the SMB division rule the effective division mode list that corresponds to an estimation mode used for creating the estimated image of the macro block, and selects a division mode in the macro block from the division mode(s) included as the element (s) in the effective division mode list, and the VLC portion codes information that indicates the division mode selected by the division mode determining portion.

A seventh technical means is the image encoder of any one of the third to the sixth technical means, further comprising an MB class determining portion that calculates an MB class, the MB class indicating a degree of complication of a macro block, wherein the division mode determining portion determines a division mode corresponding to the estimation mode determined by the estimation mode determining portion, according to the SMB division rule and the MB class.

An eighth technical means is the image encoder of any one of the first to the seventh technical means, wherein the division mode includes a laterally-elongated rectangle division mode that designates to divide including laterally-elongated rectangular sub-macro blocks, and a longitudinally-elongated rectangle division mode that designates to divide including longitudinally-elongated rectangular sub-macro blocks.

A ninth technical means is an image decoder that creates a decoded image by decoding coded data that is encoded for each macro block, comprising a VLD portion that extracts and variable-length-decodes transformation coefficient levels and an estimation mode from the coded data; an inverse quantizing portion that restores transformation coefficients by inversely quantizing the transformation coefficient levels that are extracted by the VLD portion; an IDCT portion that restores estimation residual differences by inversely frequency-transforming the transformation coefficients restored by the inverse quantizing portion; and an estimating portion that creates an estimated image corresponding to sub-macro blocks based on the estimation mode extracted by the VLD portion, wherein the image decoder creates the decoded image for each macro block by coupling a plurality of local decoded images acquired by adding the estimation residual differences to the estimated image for each sub-macro block, based on a division mode determined corresponding to the estimation mode.

EFFECT OF THE INVENTION

According to the image encoder of the present invention, an input image can be coded using an amount of codes that is smaller than that of the conventional technique by dividing an MB into SMBs in a division mode that is suitable for the property of estimation residual differences acquired when a specific estimation mode is applied with that is selected from many candidate division modes, and executing frequency transformation for the SMBs.
According to the image decoder of the present invention, coded data that is encoded by the image encoder can be decoded.

BRIEF DESCRIPTION OF DRAWINGS

[Fig. 1] Fig. 1 is a block diagram of an exemplary configuration of an image encoder according to an embodiment of the present invention.

[Fig. 2] Fig. 2 is a flowchart for explaining an exemplary operation of the image encoder depicted in Fig. 1.

[Fig. 3] Fig. 3 is a block diagram of an exemplary configuration of an MB coding portion.

[Fig. 4] Fig. 4 is diagrams of division modes that are applicable in the present invention.

[Fig. 5] Fig. 5 is a flowchart for explaining an exemplary operation of the MB coding portion.

[Fig. 6] Fig. 6 is a block diagram of an exemplary configuration of an SMB division rule creating portion.

[Fig. 7] Fig. 7 is a flowchart for explaining an exemplary operation of the SMB division rule creating portion.

[Fig. 8] Fig. 8 is a block diagram of an exemplary configuration of an image decoder according to an embodiment of the present invention.

[Fig. 9] Fig. 9 is a flowchart for explaining an exemplary operation of the image decoder depicted in Fig. 8.

[Fig. 10] Fig. 10 is a block diagram of an exemplary configuration of an MB decoding portion.

[Fig. 11] Fig. 11 is a flowchart for explaining an exemplary operation of the MB decoding portion.

[Fig. 12] Fig. 12 is a block diagram of another exemplary configuration of the MB coding portion.

[Fig. 13] Fig. 13 is a flowchart for explaining another exemplary operation of the MB coding portion.

[Fig. 14] Fig. 14 is a block diagram of another exemplary configuration of the SMB division rule creating portion.

[Fig. 15] Fig. 15 is a flowchart for explaining another exemplary operation of the SMB division rule creating portion.

[Fig. 16] Fig. 16 is a block diagram of another exemplary configuration of the MB decoding portion.

[Fig. 17] Fig. 17 is a flowchart for explaining another exemplary operation of the MB decoding portion.

[Fig. 18] Fig. 18 is a diagram for explaining order of processes executed when an image is processed for each macro block.

[Fig. 19] Fig. 19 is diagrams of division modes and estimation modes that are applicable to types of MS in a conventional technique.

EMBODIMENTS OF THE INVENTION

(Embodiment 1: Method Using SMB Division Rule)

An embodiment of an image encoder and an image decoder according to the present invention will be described with reference to the accompanying drawings.

<Exemplary Configuration of Encoder>

The image encoder of the embodiment will be described.

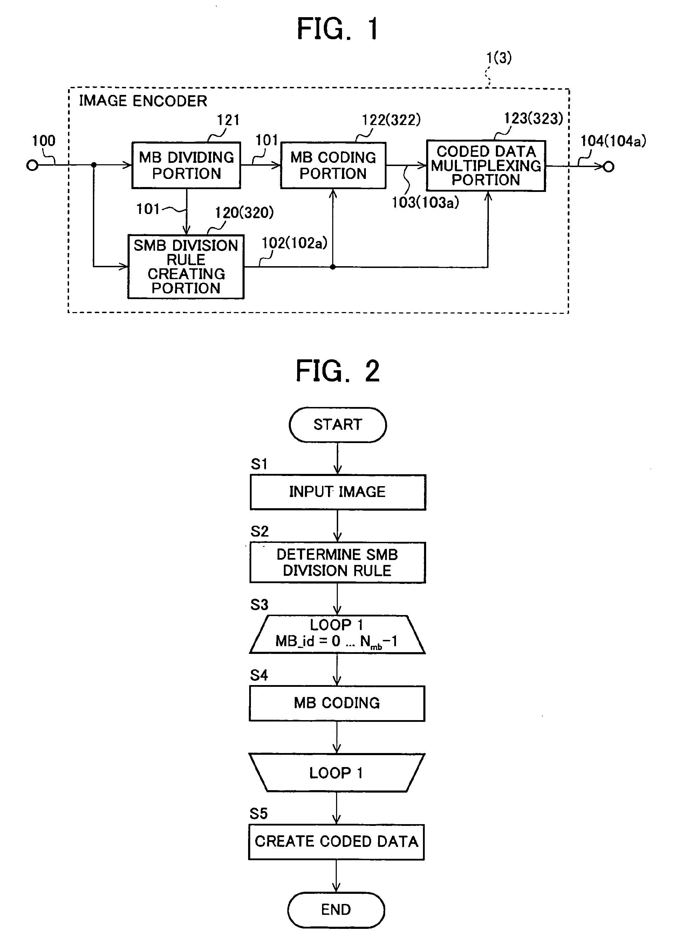

Fig. 1 is a block diagram of an exemplary configuration of an image encoder according to an embodiment of the present invention. In Fig. 1, "1" denotes the image encoder and the image encoder 1 includes an SMB division rule creating portion 120, an MB dividing portion 121, an MB coding portion 122, and a coded data multiplexing portion 123.

The SMB division rule creating portion 120 creates and outputs an SMB division rule 102 based on an input image 100. The SMB division rule provides which division mode should be applied with when a specific estimation mode is selected, and the details thereof will be described later.
The MB dividing portion 121 divides the input image 100 and sequentially outputs MB images 101 acquired in order of raster scanning.
The MB coding portion 122 codes the MB images 101 sequentially input from the MB dividing portion 121 based on the SMB division rule 102 input from the SMB division rule creating portion 120, and sequentially outputs the results of the coding of the MBs as MB coded data 103.
The coded data multiplexing portion 123 multiplexes the SMB division rule 102 input from the SMB division rule creating portion 120 and the MB coded data 103 sequentially input from the MB coding portion 122 with each other, and outputs the multiplexing result as coded data 104.

<Exemplary Operation of Encoder>

Fig. 2 is a flowchart for explaining an exemplary operation of the image encoder 1 depicted in Fig. 1.
When the image encoder 1 is externally input with the input image 100, the image encoder 1 supplies the input image 100 to the SMB division rule creating portion 120 and the MB dividing portion 121 (step S1).

The SMB division rule creating portion 120 creates (determines) the SMB division rule 102 based on the input image 100 supplied at step S1, and outputs the SMB division rule 102 to the MB coding portion 122 and the data multiplexing portion 123 (step S2).

The MB dividing portion 121 divides the input image 100 supplied at step S1 into the MB images 101, and sequentially outputs the MB images 101 to the MB coding portion 122. A process of step S4 is executed for each of a total of Nmb MB images that each are identified by an identifier MB_id (MB_id=0, ..., Nmb-1) (step S3).

The MB coding portion 122 creates the MB coded data 103 based on the SMB division rule 102 input at step S2 and the MB images 101 input at step S3, and outputs the MB coded data 103 to the coded data multiplexing portion 123 (step S4).

The coded data multiplexing portion 123 multiplexes the SMB division rule 102 input at step S2 and the total of Nmb pieces of MB coded data 103 input at step S4 with each other, thereby, creates the coded data 104, and outputs the coded data 104 to the exterior (step S5).

According to the above procedure, the image encoder 1 can code the input image 100, create the coded data 104, and output the coded data 104 to the exterior.

<Exemplary Configuration of MB Coding Portion 122>

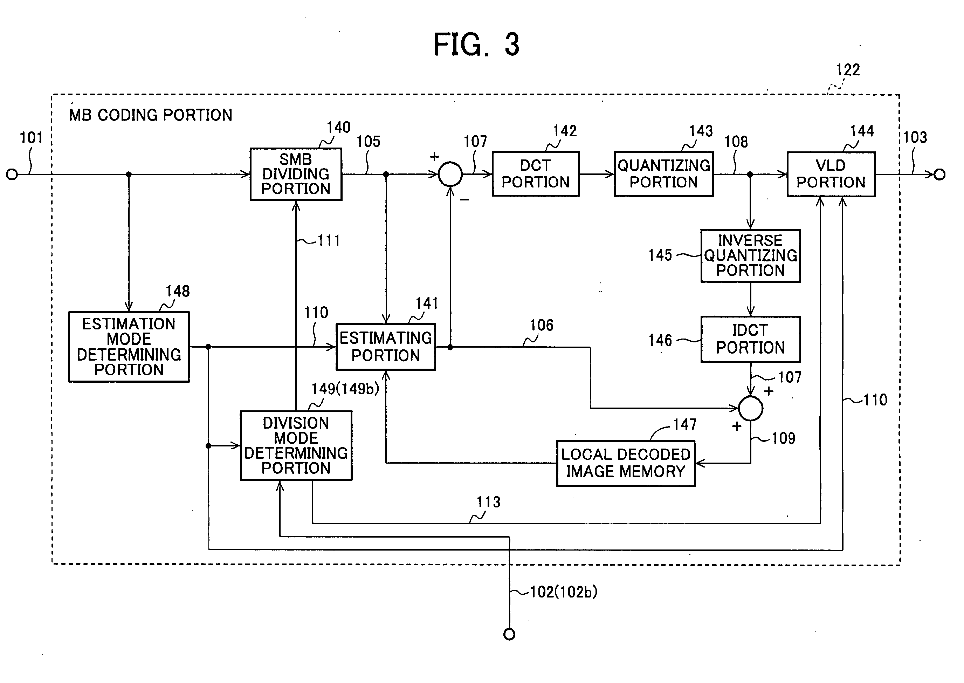

The detailed configuration of the MB coding portion 122 included in the image encoder 1 will be described. Fig. 3 is a block diagram of an exemplary configuration of the MB coding portion 122. In Fig. 3, the MB coding portion 122 is configured by an SMB dividing portion 140, an estimating portion 141, a DCT portion 142, a quantizing portion 143, a VLC (Variable Length Coding) portion 144, an inverse quantizing portion 145, an IDCT portion 146, a local decoded image memory 147, an estimation mode determining portion 148, and a division mode determining portion 149.

The image encoder 1 includes as its main components the estimation mode determining portion 148 that determines an estimation mode that indicates a method of creating an estimated image for each macro block, the division mode determining portion 149 that determines a division mode that indicates a method for dividing into sub-macro blocks for each macro block corresponding to the estimation mode determined by the estimation mode determining portion 148, the SMB dividing portion 140 that divides a macro block into sub-macro blocks based on the division mode determined by the division mode determining portion 149, and the estimating portion 141 that creates an estimated image of a macro block based on the estimation mode determined by the estimation mode determining portion 148, and the image encoder 1 frequency-transforms the difference between the input image and the estimated image for each sub-macro block. The components included in the image encoder 1 will be described in detail.

<Description of Estimation Mode Determining Portion 148>

Based on the MB images 101 input, the estimation mode determining portion 148 selects and outputs an estimation mode 110 that is suitable for estimating the SMB images in the current MB from three estimation modes of "DC", "Hor", and "Vert" that are the estimation modes used in the image encoder 1. An estimated image creation processing according to each of the modes will be described later. However, for DC, an estimated image is created based on the average pixel value of local decoded images around an SMB. For Hor, because this is a horizontal direction estimation mode, an estimated image is created based on a local decoded image adjacent to the left side of an SMB. For Vert, because this is a vertical direction estimation mode, an estimated image is created based on a local decoded image adjacent to the top side of an SMB.

The method for selecting an estimation mode by the estimation mode determining portion 148 is as follows. The horizontal edge intensity "EH" and the vertical edge intensity "EV" of each of the MB images 101 are calculated using the following equations.

[Eq. 1]

$$EV = \sum_{j=0}^{15}\sum_{i=0}^{15}\sum_{l=0}^{2}\sum_{k=0}^{2}\left| A_V(k,1)\cdot B(i+k-1, j+1-1)\right| \quad \text{where、} \{A_V(k,l)\} = \begin{bmatrix} -1 & 0 & 1 \\ -2 & 0 & 2 \\ -1 & 0 & 1 \end{bmatrix}$$

$$EH = \sum_{j=0}^{15}\sum_{i=0}^{15}\sum_{l=0}^{2}\sum_{k=0}^{2}\left|A_H(k,1)\cdot B(i+k-1, j+1-1)\right| \quad \text{where、} \quad \{A_H(k,l)\} = \begin{bmatrix} -1 & -2 & -1 \\ 0 & 0 & 0 \\ 1 & 2 & 1 \end{bmatrix}$$

In the above, B(i, j) corresponds to a pixel value of a pixel that is located at (i, j) relative to a pixel that is on the upper left of an MB image. However, when (i, j) indicates the pixel outside of the MB, that is, when i and j are i<0 or 16≤i, or j<0 or 16≤j, the value of B(i, j) is a pixel value of a pixel inside an MB that is closest to the pixel indicated by (i, j).

An estimation mode is then determined by comparing a predetermined threshold value THE (for example, THE=1000) , and EH and EV with each other. When EH, EV, and THE are EH≥THE and EV<THE, the estimation mode is determined as Hor. In another cases, when EH, EV, and THE are EH<THE and EV≥THE, the estimation mode is determined as Vert. In the rest of the cases, the estimation mode is determined as DC.

By selecting in this manner, Hor is selected as the estimation mode when the correlation between pixels in the horizontal direction is high and the correlation between the pixels in the vertical direction is low in the MB images 101 as in the case where the MB images 101 have present therein edges in the horizontal direction. Similarly, Vert is selected as the estimation mode when the correlation between the pixels in the vertical direction is high and the correlation between the pixels in the horizontal direction is low in the MB images 101 as in the case where the MB images 101 have present therein vertical edges. DC is selected as the estimation mode when the MB images 101 are complicated areas and the correlations between the pixels in the horizontal and vertical directions are low, or when the MB images 101 are flat areas and the correlations between the pixels in the horizontal and vertical directions are high.

<Description of Division Mode Determining Portion 149>

The division mode determining portion 149 outputs a division mode 111 that corresponds to the estimation mode 110 input from the estimation mode determining portion 148 based on the correspondence relation between the estimation mode and the division mode provided in the SMB division rule 102 input.

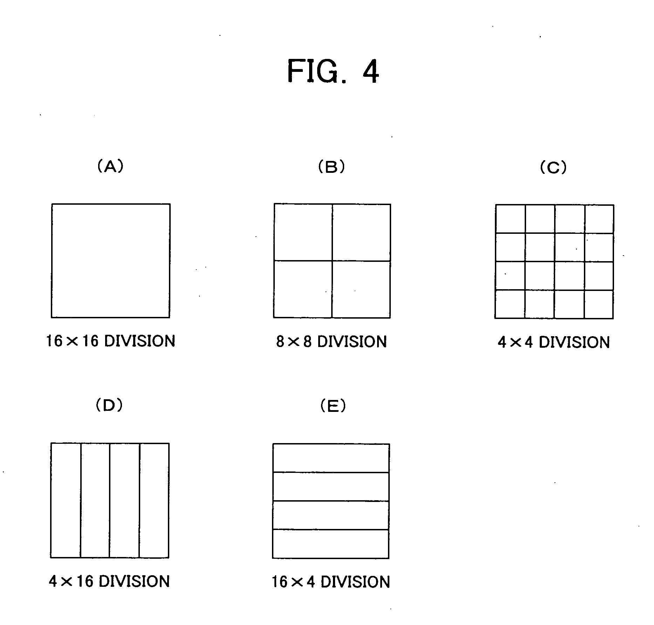

The image encoder 1 uses five kinds of division mode depicted in Figs. 4 (16×16 division, 8×8 division, 4×4 division, 4x16 division, and 16x4 division). The MB is not divided in the 16×16 division depicted in Fig. 4(A). The MB and the SMB coincide with each other and the SMB is configured by 16×16 pixels. The MB is divided into four SMBs each configured by 8x8 pixels in the 8x8 division depicted in Fig. 4(B). The MB is divided into 16 SMBs each configured by 4×4 pixels in the 4x4 division depicted in Fig. 4 (C). The MB is divided into four longitudinally elongated rectangular SMBs each configured by 4×16 pixels in the 4×16 division depicted in Fig. 4(D). The MB is divided into four laterally elongated rectangular SMBs each configured by 16x4 pixels in the 16×4 division depicted in Fig. 4(E).

According to the SMB division rule 102, any one of the five kinds of division mode is correlated with each of the three kinds of estimation mode (DC, Hor, and Vert). Therefore, the division mode determining portion 149 can determine the division mode 111 to be output, corresponding to the estimation mode 110.

An example of the SMB division rule 102 is that, in an image having therein many relatively flat areas, the division modes of (16×16 division, 4x16 division, and 16x4 division) are correlated with each of the estimation modes of (DC, Hor, and Vert). Another example thereof is that, in an image having therein many relatively complicated areas, the division modes of (8×8 division, 4×4 division, and 4×4 division) are correlated with each of the estimation modes of (DC, Hor, and Vert).

<Description of SMB Dividing Portion 140>

The SMB dividing portion 140 divides each of the MB images 101 sequentially input based on the division mode 111 input from the division mode determining portion 149, and outputs the MB images 101 divided as SMB images 105 in predetermined order (for example, order according to which the position of a pixel on the upper left of an SMB in an MB precedes in the raster scanning order).

<Description of Estimating Portion 141>

The estimating portion 141 creates and outputs estimated images 106 that approximate the SMB images 105 input from the SMB dividing portion 140 based on the estimation mode 110 input from the estimation mode determining portion 148. For example, assuming that the size of each of the SMB images 105 input is Ws×Hs pixels and the position of a pixel on the upper left of the SMB image 105 in the input image 100 is (xcs, ycs), each pixel value P(i, j) of the estimated image 106 that is created in a specific estimation mode PM is determined by the following equation.
[Eq. 2]

$$P(i,j) = \begin{cases} \dfrac{1}{W_S + H_S} \left\{ \sum_{k=0}^{W_S-1} I_d(x_{CS}+k, y_{CS}-1) + \sum_{l=0}^{H_S-1} I_d(x_{CS}-1, y_{CS}+l) \right\} & \text{(when PM and DC are PM = DC)} \\ I_d(x_{CS}-1, y_{CS}+j) & \text{(when PM and Hor are PM = Hor)} \\ I_d(x_{CS}+i, y_{CS}-1) & \text{(when PM and Vert are PM = Vert)} \end{cases}$$

$$(i = 0 \ldots W_S - 1, j = 0 \ldots H_S - 1)$$

In the above, "Id (x, y) " is a pixel value of a local decoded image that is recorded on the local decoded image memory 147.

<Description of DCT Portion 142>

The DCT portion 142 applies two-dimensional discrete cosine transformation to the estimation residual differences 107 input (Ws×Hs pixels) and outputs this transformation result as a transformation coefficients (Ws×Hs coefficients).

<Description of Quantizing Portion 143>

The quantizing portion 143 quantizes each of the transformation coefficients input from the DCT portion 142 at predetermined quantizing process steps, and derives and outputs transformation coefficient levels 108 (Ws×Hs levels).

<Description of VLC portion 144>

The VLC portion 144 variable-length-codes and multiplexes of the transformation coefficient levels 108 input from the quantizing portion 143 and the estimation mode 110 input from the estimation mode determining portion 148, and outputs the results as the pieces of MB coded data 103.

<Description of Inverse Quantizing Portion 145>

The inverse quantizing portion 145 applies inverse quantization to the transformation coefficient levels 108 (Ws×Hs levels) input from the quantizing portion 143, thereby, restores the result to be frequency transformation coefficients (Ws×Hs coefficients), and outputs the coefficients.

<Description of IDCT Portion 146>

The IDCT portion 146 applies two-dimensional inverse discrete cosine transformation to the frequency transformation coefficients (Ws×Hs coefficients) input from the inverse quantizing portion 145, thereby, reconstructs the estimation residual differences (Ws×Hs pixels), and outputs the differences.

<Description of Local Decoded Image Memory 147>

The local decoded images 109 created for each SMB is recorded sequentially in the local decoded image memory 147. Therefore, as of the time when an SMB in the current MB is being processed, the local decoded image memory 147 has recorded thereon the local decoded images that correspond to the MBs that are located before the current MB in the raster scanning order and local decoded images that correspond to the SMBs processed before the SMB in the current MB.

<Exemplary Operation of MB Coding Portion 122>

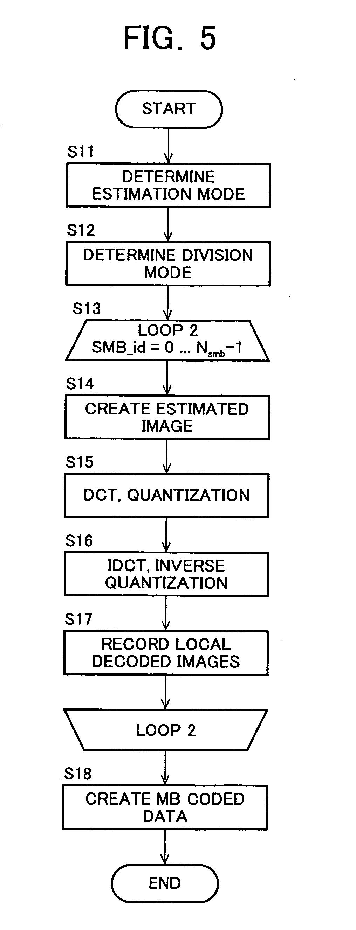

Fig. 5 is a flowchart for explaining an exemplary operation of the MB coding portion 122. The following flow describes in detail the processing of step S4 in the exemplary operation of the image encoder 1 depicted in Fig. 2.

The estimation mode determining portion 148 derives the estimation mode 110 based on the MB images 101 input from the MB dividing portion 121 depicted in Fig. 1, and outputs the estimation mode 110 to the estimating portion 141, the division mode determining portion 149, and the VLC portion 144 (step S11).

The division mode determining portion 149 determines the division mode 111 based on the estimation mode 110 input from the estimation mode determining portion 148 at step S11 and the SMB division rule 102 input from the SMB division rule creating portion 120 depicted in Fig. 1, and outputs the division mode 111 to the SMB dividing portion 140 (step S12).

The SMB dividing portion 140 divides the MB images 101 input from the MB dividing portion 121 depicted in Fig. 1 into Nsmb SMB images based on the division mode 111 input at step S12. The SMB dividing portion 140 sequentially outputs the total of Nsmb SMB images 105 that are acquired as the result of the division and that each are identified by the identifier SMB_id (SMB_id=0, ..., Nsmb-1), to the estimating portion 141 and the DCT portion 142. Processes of steps S14 to S17 are sequentially executed for each of the SMB images 105 (step S13).

The estimating portion 141 creates and outputs the estimated images 106 based on the estimation mode 110 input from the estimation mode determining portion 148 at step S11 and local decoded images recorded on the local decoded image memory 147 (step S14).

The estimation residual differences 107 that are the differences between the SMB images 105 output at step S13 and the estimated images 106 output at step S14 are input into the DCT portion 142. The DCT portion 142 transforms the estimation residual differences 107 into transformation coefficients using the frequency transformation (DCT) and, thereafter, the transformation coefficients are quantized by the quantizing portion 143. The quantization result is output to the VLC portion 144 and the inverse quantizing portion 145 as the transformation coefficient levels 108 (step S15).

The transformation coefficient levels 108 output at step S15 are inverse-quantized by the inverse quantizing portion 145, are restored as the transformation coefficients, thereafter, are inverse frequency-transformed by the IDCT portion 146, and are restored and output as the estimation residual differences 107 (step S16).

The estimation residual differences 107 output at step S16 are added to the estimated images 106 output at step S14 and are recorded on the local decoded image memory 147 as the local decoded images 109 (step S17).

The VLC portion 144 finally variable-length-codes the estimation mode 110 input from the estimation mode determining portion 148 at step S11 and the transformation coefficient levels 108 of SMBs input from the quantizing portion 143 at step S15, and outputs the transformation results to the coding data multiplexing portion 123 depicted in Fig. 1 as the pieces of MB coded data 103 (step S18).

According to the above procedure, the MB coding portion 122 can code the input MB images 101 and create the MB coded data 103. At this time, the estimation mode that is suitable for the MB images 101 is selected and the division mode that is suitable for the estimation mode is selected based on the SMB division rule 102 separately input. Therefore, compared to the case where the division mode is independently determined from the estimation mode, the MB images can be coded using a smaller amount of codes.

<Exemplary Configuration of SMB Division Rule Creating Portion 120>

A detailed configuration of the SMB division rule creating portion 120 included in the image encoder 1 will be described.

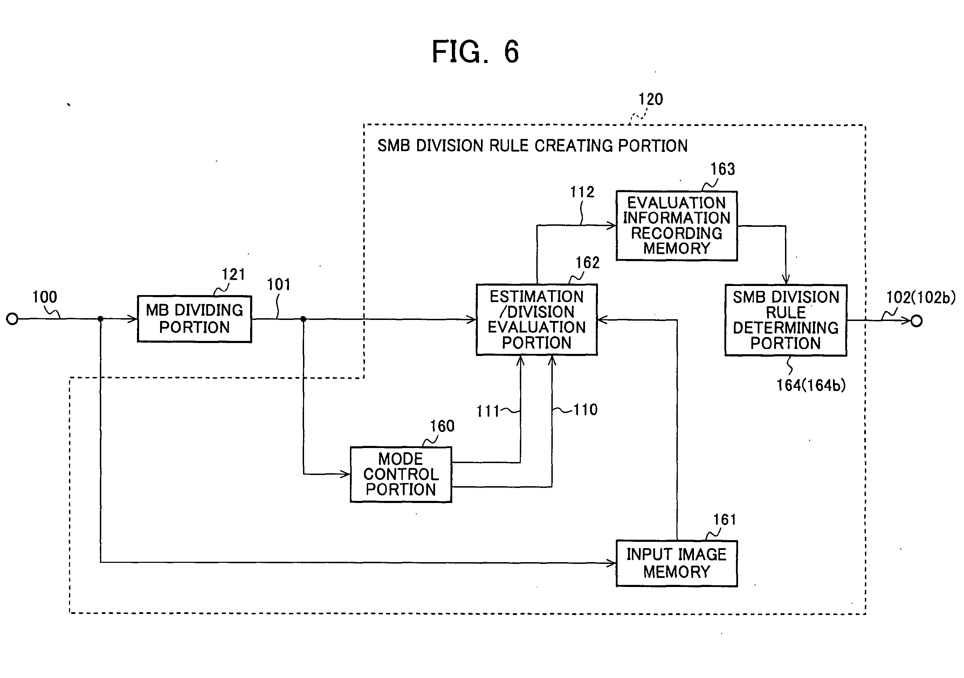

Fig. 6 is a block diagram of an exemplary configuration of the SMB division rule creating portion 120. In Fig. 6, the SMB division rule creating portion 120 is configured by a mode control portion 160, an input image memory 161, an estimation/division evaluating portion 162, an evaluation information recording memory 163, and an SMB division rule determining portion 164. The MB dividing portion 121 is the same as the MB dividing portion 121 depicted in Fig. 1.

The SMB division rule creating portion 120 calculates a mode evaluation value that indicates the degree of properness of the combination of the estimation mode and the division mode, and creates the SMB division rule that correlates the proper division mode to each of the estimation modes based on the mode evaluation value calculated. The division mode determining portion 149 determines the division mode that corresponds to the estimation mode determined by the estimation mode determining portion 148 according to the SMB division rule. The components included in the SMB division rule creating portion 120 will be described in detail.

<Description of Mode Control Portion 160>

The mode control portion 160 starts up in response to the input of the MB images 101 and outputs all possible combinations using the estimation mode 110 and the division mode 111 in arbitrary order. For example, a total of 15 kinds of combination are output for, for example, the three kinds of estimation mode (DC, Hor, and Vert) and the five kinds of division mode (16x16 division, 8x8 division, $4 \times 4$ division, 16x4 division, and 4x16 division).

<Description of Input Image Memory 161>

The input image 100 is recorded in the input image memory 161.

<Description of Estimation/Division Evaluating Portion 162>

The estimation/division evaluating portion 162 calculates and outputs the mode evaluation value 112 that indicates the degree of the properness of a specific combination of the specific estimation mode and the division mode based on the MB images 101 input from the MB dividing portion 121, and the estimation mode 110 and the division mode 111 input from the mode control portion 160. The mode evaluation value 112 is output after being correlated with the estimation mode 110 and the division mode 111.

More specifically, the mode evaluation value 112 is calculated according to the following procedure. The estimation mode and the division mode input into the estimation/division evaluating portion 162 are referred to as "PM" and "DM", respectively. The estimated image is first calculated from the input image 100 that is recorded on the input image memory 161 based on the estimation mode PM. Each pixel P'(i, j) of an estimated image P' (16x16 pixels) is calculated using the following equation.

[Eq. 3]

$$P'(i,j) = \begin{cases} \dfrac{1}{2N}\left\{ \sum_{k=0}^{15} I_C(x_C + k, y_C - 1) + \sum_{l=0}^{15} I_C(x_C - 1, y_C + 1) \right\} & (PM = DC) \\ I_C(x_C - 1, y_C + j) & (PM = Hor) \\ I_C(x_C + i, y_C - 1) & (PM = Vert) \end{cases}$$

$$(i = 0 \ldots 15, \quad j = 0 \ldots 15)$$

In the above, "$I_C(x, y)$" represents the pixel value of a pixel at a position (x, y) in the input image 100. " (xc, yc) " represents a position in the input image 100 of a pixel that is located on the upper left of an MB to be processed. From the above equation, when PM=DC, an estimated image is created based on the average value of the pixels around the MB. When PM=Hor or PM=Vert, an estimated image is created using the spatial correlation of the pixel values in the lateral direction or the longitudinal direction.

An estimation residual difference D' (16x16 pixels) is calculated that is the difference between the MB image 101 and the estimated image P'. Each pixel value D'(i, j) of D' is calculated according to the following equation.

[Eq. 4]

$$D'(i,j) = I_C(X_C + i, y_C + j) - P'(i,j) \qquad (i = 0 \ldots 15, \ j = 0 \ldots 15)$$

Transformation coefficient C' is obtained by dividing the estimation residual difference D' for each SMB based on the division mode 111 and executing DCT for each SMB. A coefficient value C'(u, v) of each transformation coefficient C' that corresponds to each SMB is calculated using the following equation.

[Eq. 5]

$$C'(u,v) = \frac{2A(u)A(v)}{\sqrt{X_S H_S}} \sum_{i=0}^{W_s-1}\sum_{j=0}^{H_s-1} I_C(X_C + O_x + i, y_C + O_y + j) \cdot \cos\frac{(2i+1)u\pi}{2W_S} \cdot \cos\frac{(2j+1)v\pi}{2H_S}$$

In the above, $A(x) = \begin{cases} 1/\sqrt{2} & (\text{when x is x} = 0) \\ 1 & (\text{when x is x} \neq 0) \end{cases}$

In the above, "(Ox, Oy)" represents for each pixel a displacement of a pixel on the upper left of the SMB to be processed from a pixel on the upper left of the MB to be processed. "$W_S$" represents the width of the SMB and "$H_s$" represents the height of the SMB for each pixel.

An energy dispersion degree $EC_S$ (SMB_id) is calculated that indicates on how many transformation coefficients of the transformation coefficients C' of the SMBs a large portion of the energy of the estimation residual differences concentrates. The value of a smallest integer value K that satisfies the following equation is set to be the energy dispersion degree $EC_S$ (SMB_id).

[Eq. 6]

$$R_e \cdot E_s \leq \sum_{K=0}^{K-1}\{C'(K)\}^2$$

In the above, "C'(k)" represents a (k+1)th coefficient value acquired when the transform coefficients C' are lined up in order of descending magnitude. "Re" is a parameter for calculating the energy dispersion degree and, for example, Re=0.95 is used. "Es" represents the energy of the estimation residual differences and is calculated as the sum of squares of the pixel values in the estimation residual differences. According to the above equation, when Re=0.95, the value of ECs indicates on how many transformation coefficients 95% of the energy of the estimation residual differences concentrate. Therefore, it can be said that the energy of the estimation residual differences in the SMB concentrates on fewer transformation coefficients as the value of ECs is smaller.

Finally, the mode evaluation value 112 (ECm) that is an amount indicating the degree of properness of the division mode DM for the estimation mode PM in the MB to be processed, is derived using the following equation as the total of the energy dispersion degrees in the SMBs in the MB.

[Eq. 7]

$$EC_m = \sum_{SMB\_id=0}^{N_{smb}-1} EC_s$$

According to the above equation, the mode evaluation value 112 indicates the degree of the energy dispersion of the transformation coefficients obtained when the estimation mode PM and the division mode DM are used for the MB to be processed. Therefore, it can be said that a combination of the estimation mode PM and the division mode DM is more preferable as the mode evaluation value is smaller.

<Description of Evaluation Information Recording Memory 163>

The mode evaluation values 112 that each are correlated with the estimation mode 110 and the division mode 111 are sequentially recorded in the evaluation information recording memory 163.

<Description of SMB Division Rule Determining Portion 164>

The SMB division rule determining portion 164 refers to the mode evaluation values 112 that are recorded on the evaluation information recording memory 163, creates the SMB division rule 102 based on the mode evaluation values 112, and outputs the SMB division rule 102.

According to the SMB division rule 102, an effective division mode is correlated with each of all applicable estimation modes. The most suitable division mode DM for a specific estimation mode PM is determined according to the following procedure.

The evaluation value of each division mode DM for the estimation mode PM is calculated based on the mode evaluation values 112 that are recorded on the evaluation information recording memory 163. For example, as to the evaluation value of the division mode DM for the estimation mode PM: the mode evaluation value 112 that is correlated with the estimation mode PM and the division mode DM is obtained from the evaluation information recording memory 163; and the average value of a plurality of mode evaluation values 112 obtained is determined as the evaluation value of the division mode DM for the estimation mode PM.

A division mode is selected that causes the mode evaluation value ECm to be minimal for the estimation mode PM and this division mode is determined as the most suitable division mode for the estimation mode PM. The mode evaluation value ECm is an index that indicates the dispersion degree of the energy to the transformation coefficients after the frequency transformation and, therefore, by selecting the division mode DM for the estimation mode PM according to the above procedure, a division mode can be selected with which the dispersion degree of the energy to the transformation coefficients is small. In other words, a division mode can be selected that causes the energy to concentrate on fewer transformation coefficients after the frequency transformation.

<Exemplary Operation of SMB Division Rule Creating Portion>

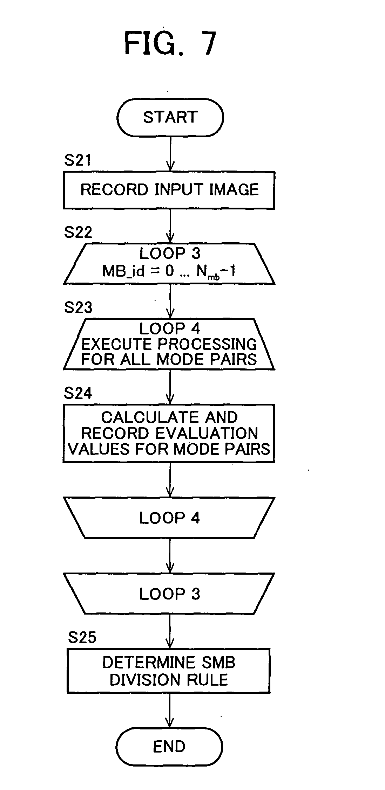

Fig. 7 is a flowchart for explaining an exemplary operation of the SMB division rule creating portion 120. The following flow describes in detail the processing of step S2 in the exemplary operation of the image encoder 1 depicted in Fig. 2.

The input image 100 from outside is first input to the MB dividing portion 121 and is recorded on the input image memory 161 (step S21).

The MB dividing portion 121 divides the input image 100 from outside into MB images 101. The total of Nmb pieces of MB images that are obtained as the result of the division and that each are identified by the identifier MB_id (MB_id=0, ..., Nmb-1) are sequentially output to the SMB dividing portion 140 (Fig. 3) and the mode control portion 160 (Fig. 6). Processes of steps S23 and S24 are executed for each of the MB images (step S22).

The mode control portion 160 creates pairs of the estimation mode 110 and the division mode 111, and sequentially outputs these pairs to the estimation/division evaluating portion 162. A process of step S24 is executed for each of the pairs of the estimation mode 110 and the division mode 111 (step S23).

The estimation/division evaluating portion 162 calculates the mode evaluation value 112 for each of the pairs of the estimation mode 110 and the division mode 111 that are input from the mode control portion 160 at step S23, outputs the mode evaluation values 112 to the evaluation information recording memory 163, and records the mode evaluation values 112 thereon (step S24).

The SMB division rule determining portion 164 determines one SMB division rule 102 based on the mode evaluation values 112 that are recorded on the evaluation information recording memory 163 at step S24, and outputs the SMB division rule 102 to the MB coding portion 122 and the coded data multiplexing portion 123 depicted in Fig. 1 (step S25).

In the processes of steps S22 to S24, Nmb pieces of mode evaluation values 112 are recorded on the evaluation information recording memory 163 for each combination of the estimation mode and a dispersion mode. Therefore, at step S25, the average value of the Nmb pieces of mode evaluation values 112 is used as a selection criterion as to which division mode is selected for a specific estimation mode.

According to the above procedure, the SMB division rule creating portion 120 determines and outputs the SMB division rule 102 based on the input image 100 from outside. In this case, when DCT is applied to the estimation residual differences for the SMBs that configure the input image, the SMB division mode is correlated with that provides the block size that causes the energy concentration to be highest.

In this manner, in the image encoder 1 that determines the division mode based on the SMB division rule 102 that is created by the SMB division rule creating portion 120, the SMB division mode that causes the energy concentration to be high when the estimation residual differences are frequency-transformed is selected based on the estimation mode. Therefore, the amount of codes is reduced that is necessary for variable-length-coding the estimation residual differences that are frequency-transformed. At this time, the SMB division mode is determined corresponding to the estimation mode 110 and, therefore, the side information that indicates which division mode 111 is applied with is unnecessary and, therefore, any increase of the amount of codes associated with the increase of the side information is not generated.

(Other Embodiments)

The image encoder 1 has been described assuming that, in the SMB division rule 102, one effective division mode is correlated with each of all the estimation modes. However, effective division mode for each of all the estimation modes need not always be included in the SMB division rule 102, and a division mode that is estimated to be suitable for a specific estimation mode can also be always used without depending on the SMB division rule 102.

For example, when the estimation mode is Hor, the estimated image is created using the correlation in the lateral direction of the input image. Therefore, in the estimation residual difference that is the difference between the SMB image and the estimated image, the correlation in the lateral direction is removed and, as a result, the correlation in the longitudinal direction often remains. Therefore, it is effective to use a division mode that generates SMBs each having a longitudinally elongated shape that is effective for an image whose correlation in the lateral direction is low and whose correlation in the longitudinal direction is high. Therefore, even when a division mode to divide into SMBs each having a longitudinally elongated shape is used for the Hor estimation mode instead of the division mode that is determined by the SMB division rule creating portion 120, the energy concentrates on a few transformation coefficients. In this case, the amount of data processed in the SMB division rule creating process can be reduced and the amount of codes of the SMB division rule 102 can be reduced.

Similarly, when the estimation mode is Vert, the estimated image is created using the correlation in the longitudinal direction of the input image and, therefore, preferably, a division mode to divide into SMBs each having a laterally elongated shape is used.

Furthermore, when an estimation mode causes the estimated image to be created using the correlation in a specific direction of the image, it can be said that, preferably, a division mode is used to divide into SMBs each having a shape that is elongated in a direction perpendicular to the specific direction.

In contrast, when a plurality of division modes are present that are estimated to be effective for a specific estimation mode, an SMB division rule is also usable that correlates the estimation mode with two or more division modes each with a priority rank. (1) A method for determining the SMB division rule, (2) a method of variable-length-coding of the SMB division rule, (3) a method for determining a division mode for each MB based on the SMB division rule, and (4) a method for coding the division mode for each MB in the above case will be described with reference to Figs. 3 and 6.

(1) Method for Determining SMB Division Rule

In Fig. 6, an SMB division rule 102b that correlates the specific estimation mode with the two or more division modes can be derived by replacing the SMB division rule determining portion 164 (Fig. 6) that is one component of the image encoder 1 with an SMB division rule determining portion 164b described as follows.

The SMB division rule determining portion 164b refers to the mode evaluation values 112 that are recorded in the evaluation information recording memory 163, and creates and outputs the SMB division rule 102b based on the mode evaluation values 112. An effective division mode list {DM1, DM2, ..., DMn} in which are lined up the division modes that are effective for the specific estimation mode PM by giving priority, is determined according to the following procedure.

The evaluation value of each division mode for the estimation mode PM is calculated based on the mode evaluation values 112 recorded on the evaluation information recording memory 163. The evaluation value can be calculated according to the procedure that has been described concerning the operation of the SMB division rule determining portion 164.

The effective division mode list for each estimation mode PM is determined. A division mode is selected that causes the mode evaluation value ECm to be minimal for each estimation mode PM. This division mode is set to be an element DM 1 at the head of the effective division mode list and the minimal value of the mode evaluation value ECm is represented by "ECm1". Division modes are selected that each cause the difference between the mode evaluation value ECm and the above ECm1 to be equal to or smaller than a predetermined threshold value (for example, 2) , and these division modes are added to the effective division mode list in order of ascending mode evaluation value and are represented by DM2, DM3, ..., DMn in this order.

The effective division mode list for each estimation mode PM, that is derived according to the above procedure includes the division mode (DM1) whose dispersion degree of the energy to the transformation coefficients is minimal after the frequency transformation, and the division modes (DM2, DM3, ..., DMn) whose dispersion degrees of the energy are sufficiently small compared to that of the case where the division mode MD1 is used. The effective division mode list that is derived according to the above procedure includes at least one division mode.

The SMB division rule 102b is defined as a combination of the estimation mode PM and its corresponding effective division mode list.

(2) Method of Variable-Length-Coding of SMB Division Rule

The SMB division rule 102b is multiplexed by the coded data multiplexing portion 123 and is incorporated in the coded data and, at this time, preferably, the SMB division rule 102b is variable-length-coded. More specifically, the effective division mode list is encoded in predetermined order of the estimation modes (for example, in order of Vert, Hor, and DC) . At this time, preferably, the number of elements and predetermined identifiers indicating the division modes corresponding to the elements that are sequentially lined up from the head of the list are variable-length-coded a each effective division mode list.

(3) Method of Determining Division Mode for Each MB Based on SMB Division Rule

In Fig. 3, the procedure is as follows for determining the division modes by the division mode determining portion 149b that has replaced the division mode determining portion 149. The division mode determining portion 149b needs to be also input with the MB images 101 in addition to the SMB division rule 102b and the estimation mode 110. The division mode determining portion 149b extracts the effective division mode list that corresponds to the estimation mode 110 from the SMB division rule 102b, calculates the mode evaluation value ECm for each division mode included in the effective division mode list extracted, according to the method described in the description of the operation of the estimation/division evaluating portion 162 (Fig. 6), and determines the division mode that causes the mode evaluation value ECm to be minimal as the division mode to be used for the MB to be processed.

(4) Method of Variable-Length-Coding of Division Rule for Each MB

The division mode determining portion 149b uses the MB images 101 to select the division mode from the candidates in the effective division mode list. However, the MB images 101 are not usable during the decoding and, therefore, coding is necessary to indicate which of the division modes included in the effective division list is selected for each MB. Therefore, coding is executed to indicate for each MB how many elements are present before the selected division mode in the effective division list. When the number of element of the effective division list extracted is one, which division mode is selected is obvious and, therefore, preferably, information on the division mode selected is not coded. Information 113 indicating the division mode that is selected for each MB is input from the division mode determining portion 149b into the VLC portion 144 and is variable-length-coded by the VLC portion 144.

According to the above procedure, two or more division modes that are highly effective for a specific estimation mode can be correlated with the specific estimation mode and a division mode that is suitable for the property of the MB images can be selected from these division modes. Thereby, even in the case where the specific estimation mode is used in the image, when the property of the estimation residual differences disperses, a division mode can be selected that can cause the energy of the transformation coefficients to concentrate on a few transformation coefficients.

The input image 100 that is input into the image encoder 1 may be an image itself to be coded, or may be a divided image that is acquired by dividing an image to be coded into a plurality of areas and that is referred to "slice".

When slices are processed as the input image 100, the SMB division rule is encoded for each of the slices. In this case, a division mode can be selected that is most suitable for each estimation mode matching a local property of the image and, therefore, the amount of codes can be reduced.

According to the present invention, at least one or more SMB division rule (s) can be created and coded for one input image. Therefore, it may become possible to use a separate SMB division rule for each partial image that is obtained by dividing the image into partial images (slices).

For the image encoder 1, the amount of codes that are necessary for identifying a division mode will be described as a supplement. For example, in the case of expressing that which of the five kinds of division modes is used for each of the three kinds of estimation modes, when an SMB division rule is used, the amount of codes is (the number of estimation modes)x(the number of bits necessary for selecting the division mode)$\leq 3 \times 3$ bits=nine bits. Therefore, nine bits are sufficient. On the other hand, when side information is transmitted for each MB, three bits need to be transmitted for each MB ($16 \times 16$). Therefore, an amount of codes of 297 bits is necessary for even a small image like QCIF (176x144) and an amount of codes of as many as 24,300 bits is necessary for a large image like HD ($1,920 \times 1,080$).

In the description of the image encoder 1, it is assumed that the division modes used in the coding are five kinds (16x16 division, 8x8 division, 4x4 division, $16 \times 4$ division, and $4 \times 16$ division). However, a combination of other division modes may be used. For example, seven kinds of division mode may be used that are acquired by adding $16 \times 1$ division and $1 \times 16$ division to the five kinds of division mode. The 16x1 division is effective for the case where the correlation between the pixels of the estimation residual differences is high in the horizontal direction while is extremely low in the vertical direction. The $1 \times 16$ division is effective for the case where the correlation between the pixels of the estimation residual differences is high in the vertical direction while is extremely low in the horizontal direction. Therefore, by using the seven kinds of division mode acquired by being added with the 16×1 division and 1×16 division, a division mode that is more suitable for the property of the estimation residual differences can be selected.

<Unit for Creating Estimated Image>

The image encoder 1 has been described assuming that the creation of the estimated images 106 by the estimating portion 141 and the frequency transformation by the DCT portion 142 are both executed for each SMB. However, the estimated image can also be created in units that are different from SMBs and that each have a size equal to or smaller than that of an MB. For example: an estimated image may be created for each MB; the estimation residual differences (16×16 pixels each) that are obtained as the difference between the MB image (16×16 pixels) and the estimated image (16×16 pixels) may be divided into estimation residual differences for each SMB based on a divided mode; and these estimation residual differences may be frequency-transformed by the DCT portion 142. Though the precision of the estimated image (the degree of approximation between the estimated image and the input image) is somewhat degraded, a merit can be obtained that the estimated image creating process is simplified and the processing is facilitated.

<Exemplary Configuration of Decoder>

An image decoder 2 that decodes the coded data coded by the image encoder 1 and reproduces the image and that reproduces an image will be described.

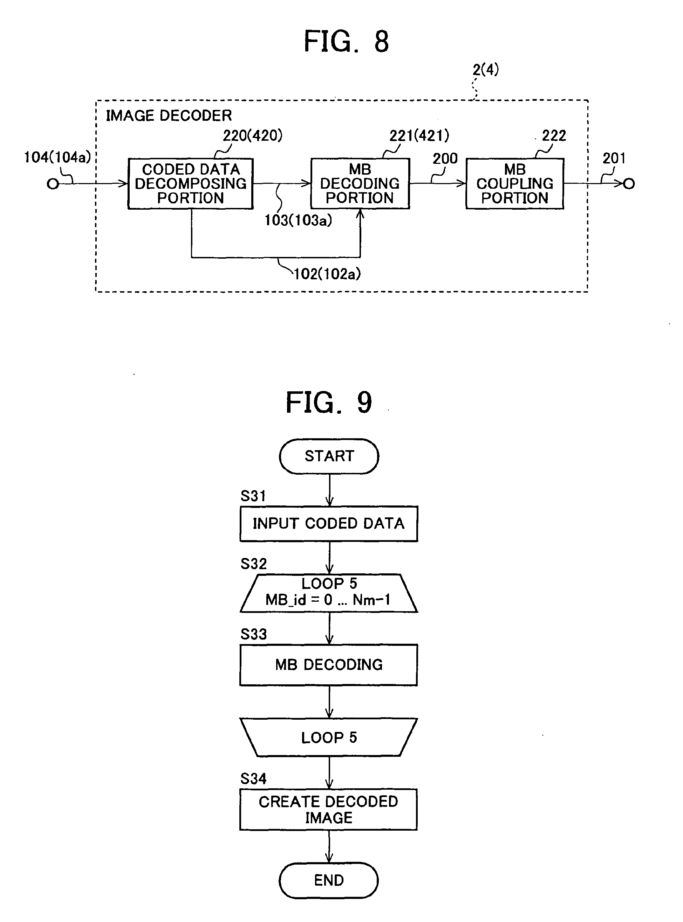

Fig. 8 is a block diagram of an exemplary configuration of the image decoder 2 according to an embodiment of the present invention. The image decoder 2 is configured by a coded data decomposing portion 220, an MB decoding portion 221, and an MB coupling portion 222.
The coded data decomposing portion 220 extracts the SMB division rule 102 and the plural pieces of MB coded data 103 from the coded data 104 input and outputs these to the MB decoding portion 221.
The MB decoding portion 221 creates and outputs MB decoded images 200 based on the SMB division rule 102 and the pieces of MB coded data 103 that are input from the coded data decomposing portion 220. The details of this processing by the MB decoding portion 221 will be described later.
The MB coupling portion 222 constructs and outputs a decoded image 201 using the MB decoded images 200 sequentially input from the MB decoding portion 221.

<Exemplary Operation of Decoder>

An exemplary operation of the image decoder 2 will be described with reference to a flowchart depicted in Fig. 9. In Fig. 9, the image decoder 2 is externally input with the coded data 104 and the coded data 104 is supplied to the coded data decomposing portion 220 (step S31).
The coded data decomposing portion 220 extracts the SMB division rule 102 from the coded data that is input at step S31, outputs the SMB division rule 102 to the MB decoding portion 221, extracts the MB coded data 103 that correspond to the MBs included in the input image, and sequentially outputs the extracted data to the MB decoding portion 221. A process of step S33 is executed for each of the total of Nmb pieces of MB coded data that each are identified by the identifier MB_id (MB_id=0, ..., Nmb-1) (step S32).
The MB decoding portion 221 creates the MB decoded images 200 based on the SMB division rule 102 and the MB coded data 103 that are input from the coded data decomposing portion 220 at step S32, and outputs the MB decoded images 200 to the MB coupling portion 222 (step S33).
The MB coupling portion 222 constructs the decoded image 201 based on the MB decoded images 200 that are sequentially input at step S33 and externally outputs the decoded image 201 (step S34).

<Exemplary Configuration of MB Decoding Portion 221>

The detailed configuration of the MB decoding portion 221 that is included in the image decoder 2 will be described.

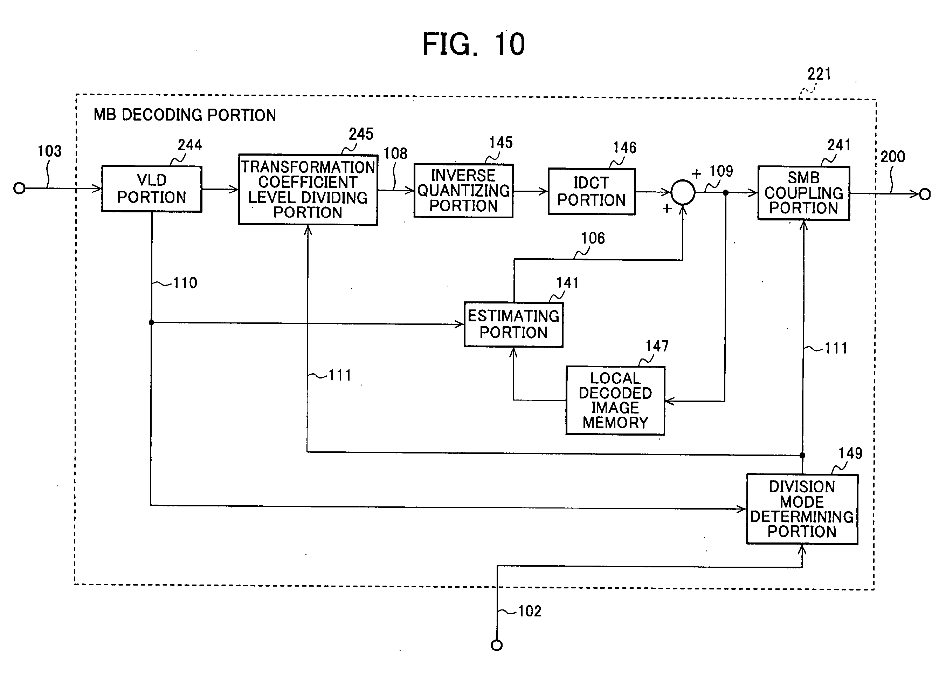

Fig. 10 is a block diagram of an exemplary configuration of the MB decoding portion 221. The MB decoding portion 221 is configured by the estimating portion 141, the inverse quantizing portion 145, the IDCT portion 146, the local decoded image memory 147, the division mode determining portion 149, an SMB coupling portion 241, and a VLD portion 244.
Components other than the SMB coupling portion 241, the VLD (Variable Length Decoding) portion 244, and a transformation coefficient level dividing portion 245 have the same functions as those of the corresponding components in the MB coding portion 122 depicted in Fig. 3, therefore, are given the same reference numerals, and will not again be described.

The image decoder 2 includes as its main components: the VLD portion 244 that extracts and variable-length-decodes the transformation coefficient levels and the estimation mode from the coded data; the inverse quantizing portion 145 that inversely quantizes the transformation coefficient levels that are extracted by the VLD portion 244 and restores the transformation coefficients; the IDCT portion 146 that inversely frequency-transforms the transformation coefficients restored by the inverse quantizing portion 145 and, thereby, restores the estimation residual differences; the estimating portion 141 that creates the estimated image that corresponds to the sub-macro blocks based on the estimation mode extracted by the VLD portion 244; and the SMB coupling portion 241 that creates a decoded image for each macro block by coupling a plurality of local decoded images that are acquired by adding the estimation residual differences to the estimated images for each sub-macro block, based on the division mode determined corresponding to the estimation mode.

The VLD portion 244 extracts the estimation mode 110 and the transformation coefficient levels from the pieces of MB coded data 103 input, outputs the estimation mode 110 to the estimating portion 141 and the division mode determining portion 149, and outputs the transformation coefficient levels to the transformation coefficient level dividing portion 245.

The transformation coefficient level dividing portion 245 divides the transformation coefficient levels input from the VLD portion 244 into the transformation coefficient levels 108 for each SMB based on the division mode 111 input from the division mode determining portion 149, and sequentially outputs the transformation coefficient levels 108.

The SMB coupling portion 241 couples the local decoded images 109 sequentially input from the local decoded image memory 147 through the estimating portion 141 based on the division mode 111 input from the division mode determining portion 149, and outputs the coupled local decoded images 109 as the MB decoded images 200.

<Exemplary Operation of MB Decoding Portion 221>

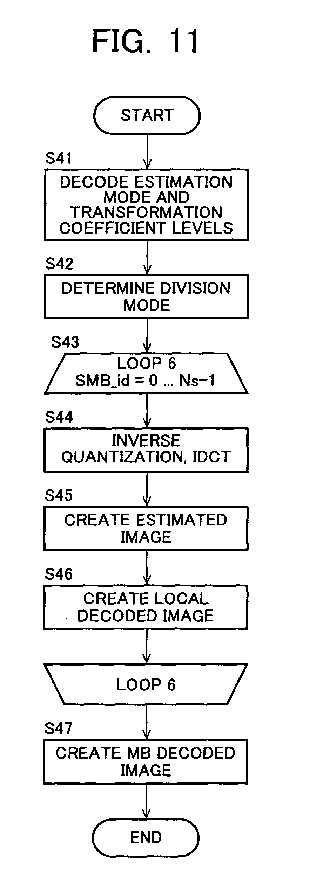

An exemplary operation of the MB decoding portion 221 will be described with reference to a flowchart depicted in Fig. 11. The operation described as follows indicates the detailed process of step S33 (Fig. 9) of the operation of the image decoder 2.

The MB coded data 103 are input from the coded data decomposing portion 220 depicted in Fig. 8 into the MB decoding portion 221 and is supplied to the VLD portion 244. The VLD portion 244 decodes the transformation coefficient levels and the estimation mode 110 from the MB coded data 103, outputs the estimation mode 110 to the estimating portion 141 and the division mode determining portion 149, and also outputs the transformation coefficient levels to the transformation coefficient level dividing portion 245 (step S41).

The division mode determining portion 149 determines the division mode 111 based on the estimation mode 110 input from the VLD portion 244 at step S41 and the SMB division rule 102 input from the coded data decomposing portion 220 depicted in Fig. 8, and outputs the division mode 111 to the transformation coefficient level dividing portion 245 and the SMB coupling portion 241 (step S42).

The transformation coefficient level dividing portion 245 divides the transformation coefficient levels input from the VLD portion 244 at step S41 into the transformation coefficient levels 108 for each SMB based on the division mode 111 input from the division mode determining portion 149 at step S42, and sequentially outputs the transformation coefficient levels 108 to the inverse quantizing portion 145. Processes of steps S44 to S46 are executed for each of the transformation coefficient levels that correspond to the total of Nsmb pieces of SMBs that are identified by the identifier SMB_id (SMB_id=0, ..., Nsmb-1) (step S43).

Inverse quantization is applied to the transformation coefficient levels 108 that are input into the inverse quantizing portion 145 at step S43 and the transformation coefficient levels 108 are output to the IDCT portion 146 as the transformation coefficients. The IDCT portion 146 applies inverse discrete cosine transformation to the transformation coefficients input from the inverse quantizing portion 145, and outputs the estimation residual differences that are created from the transformation coefficients (step S44).

The estimating portion 141 creates and outputs the estimated images 106 using the local decoded image recorded on the local decoded image memory 147 based on the estimation mode 110 input from the VLD portion 244 at step S41 (step S45).

An image formed by adding the estimation residue differences output from the IDCT portion 146 at step S44 to the estimated images 106 output from the estimating portion 141 at step S45, is recorded on the local decoded image memory 147 as the local decoded image 109 and is output to the SMB coupling portion 241 (step S46).

The SMB coupling portion 241 couples the local decoded images 109 sequentially input at step S46 based on the division mode 111 input from the division mode determining portion 149 at step S42, and outputs the local decoded images 109 coupled as the MB decoded images 200 to the MB coupling portion 222 depicted in Fig. 8 (step S47).

According to the above procedure, the MB decoding portion 221 can decode the MB coded data 103 sequentially input from the coded data decomposing portion 220 based on the SMB division rule 102 input from the coded data decomposing portion 220, and can sequentially output corresponding MB decoded images.

As above, according to the image decoder 2, the decoded image can be created from the coded data created by the image encoder 1.

(Second Embodiment: Method of Using SMB Division Rule That Corresponds to MB Class)

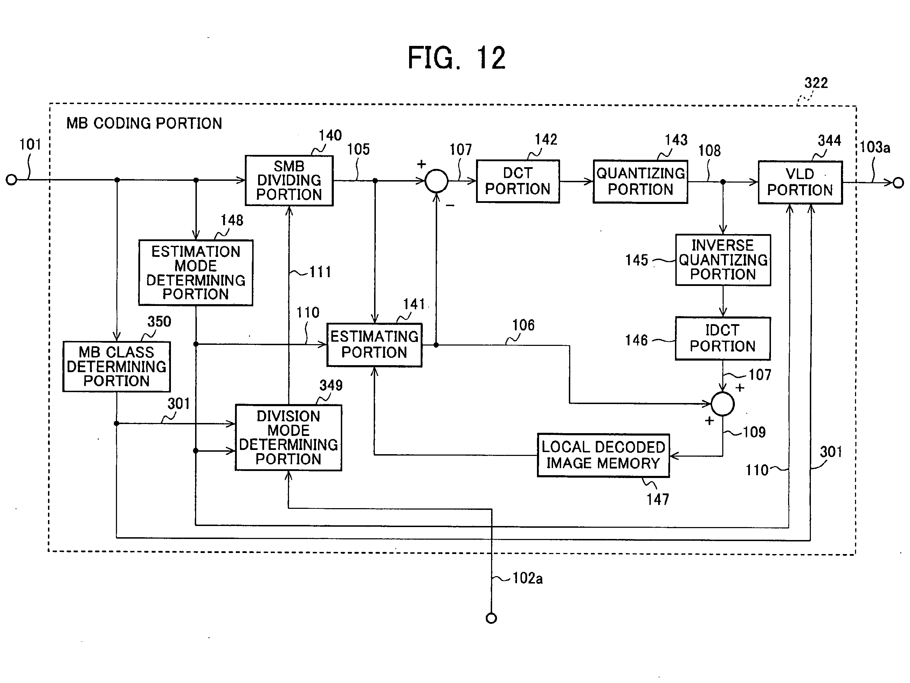

Other embodiments of the image encoder and the image decoder according to the present invention will be described with reference to Figs. 12 to 17. An image encoder described in the embodiment is characterized in that the image encoder determines a division mode that corresponds to a specific estimation mode based on information indicating the property of an MB image that is referred to as "MB class".

<Configuration and Operation of Encoder>

The embodiment will be described assuming that the image encoder 1 is replaced by an image encoder 3 in Fig. 1, and components of the image encoder 3 are depicted in brackets of Fig. 1. The image encoder 3 has a configuration which the image encoder 122 is replaced by an MB coding portion 322, the SMB division rule creating portion 120 is replaced by the SMB division rule creating portion 320, and the coded data multiplexing portion 323 is replaced by the coded data multiplexing portion 123.

The SMB division rule creating portion 320 creates an SMB division rule 102a based on the input image 100, and outputs the SMB division rule 102a to the MB coding portion 322 and the coded data multiplexing portion 323. In the SMB division rule 102a, information is provided that indicates which division mode should be applied with when a specific estimation mode is selected for an MB that is classified into an arbitrary MB class. The details of the SMB division rule creating portion 320 and the details of the method of creating the SMB rule 102a will be described later.

The MB coding portion 322 codes the MB images 101 sequentially input from the MB dividing portion 121 based on the SMB division rule 102a input from the SMB division rule creating portion 320, and sequentially outputs the result of the coding of each of the MB images 101 as the MB coded data 103a to the coded data multiplexing portion 323. The MB coded data 103a differs from the MB coded data 103 in the image encoder 1 in that the MB image includes information that indicates the MB class into which the MB image is classified.

The coded data multiplexing portion 323 multiplexes the SMB division rule 102a input from the SMB division rule creating portion 320 and the MB coded data 103a sequentially input from the MB coding portion 322, and outputs the multiplexed data as coded data 104a.

A schematic operation of the image encoder 3 is the same as the exemplary operation described at steps S1 to S5 (Fig. 2) in the image encoder 1 and, therefore, will not again be described.

<Exemplary Configuration of MB Coding Portion 322>

The detailed configuration of the MB coding portion 322 included in the image encoder 3 will be described. Fig. 12 is a block diagram of exemplary configuration of the MB coding portion 322. The MB coding portion 322 is configured by the SMB dividing portion 140, the estimating portion 141, the DCT portion 142, the quantizing portion 143, a VLC portion 344, the inverse quantizing portion 145, the IDCT portion 146, the local decoded image memory 147, the estimation mode determining portion 148, a division mode determining portion 349, and an MB class determining portion 350. Of the above components, components other than the VLC portion 344, the division mode determining portion 349, and the MB class determining portion 350 have the same functions as those of the components of the MB coding portion 122 (Fig. 3), therefore, are given the same reference numerals, and will be again be described.

<Description of MB Class Determining Portion 350>

The MB class determining portion 350 classifies the MB images into predetermined categories based on the property of the MB images 101 input from the MB dividing portion 121, and outputs the result of the classification as MB classes 301 to the division mode determining portion 349 and the VLC portion 344. In the image encoder 3, two MB classes of ("complicated" and "flat") are defined as the predetermined categories. These two MB classes represent whether an image of each of the MB images 101 is flat. The classification is executed according to the following procedure.

The degree of complication "Am" of the MB image 101 is calculated according to the following equation.

[Eq. 8]

$$A_m = \frac{1}{16 \times 15 \times 2}\left\{\sum_{j=0}^{15}\sum_{i=1}^{15}\left|B(i,j)-B(i-1,j)\right| + \sum_{j=1}^{15}\sum_{i=0}^{15}\left|B(i,j)-B(i,j-1)\right|\right\}$$

The degree of complication Am and a predetermined threshold value THa are compared with each other. When the degree of complication Am is larger than the threshold value THa, it is determined that the MB image 101 is in the "complicated" MB class. In contrast, when the degree of complication Am is equal to or smaller than the threshold value THa, it is determined that the MB image 101 is in the "flat" MB class. For example, when the range of the pixel value is zero to 255, THa that is THa=5 can be used as the threshold value THa.

<Description of Division Mode Determining Portion 349>

The division mode determining portion 349 outputs to the SMB dividing portion 140 the division mode 111 that corresponds to the MB class 301 input from the MB class determining portion 350 and the estimation mode 110 input from the estimation mode determining portion 148, based on the correspondence relation between the MB class and the estimation mode that are provided in the SMB division rule 102a input from the SMB division rule creating portion 320.

In addition to the two kinds of MB classes (complicated and flat), similarly to the image encoder 1, the image encoder 3 uses the three kinds of estimation mode (DC, Hor, and Vert) and the five kinds of division mode depicted in Fig. 4 (16×16 division, 8x8 division, 4x4 division, 16×4 division, and 4×16 division).

The SMB division rule 102a has recorded therein any one of the five kinds of division mode that is correlated with each of the three kinds of estimation mode for each of the MB classes. Therefore, in the division mode determining portion 349 the division mode 111 that is correlated with the estimation mode 110 input from the estimation mode determining portion 148 can be read from the SMB division rule 102a in the MB class 301 input from the MB class determining portion 350.

An example of the SMB rule 102a can be the example where each of the division modes of (16x16 division, 4x16 division, and 16×4 division) is correlated with each of the estimation modes of (DC, Hor, and Vert) in the "flat" MB class, and each of the division modes of (8x8 division, 4×4 division, and 4x4 division) is correlated with each of the estimation modes of (DC, Hor, and Vert) in the "complicated" MB class.

<Description of VLC Portion 344>

The VLC portion 344 variable-length-codes and multiplexes the transformation coefficient levels 108 input from the quantizing portion 143, the estimation mode 110 input from the estimation mode determining portion 148, and the MB class 301 input from the MB class determining portion 350, and outputs the resultant data as the pieces of MB coded data 103a to the coded data multiplexing portion 323.

<Exemplary Operation of MB Coded Portion 322>

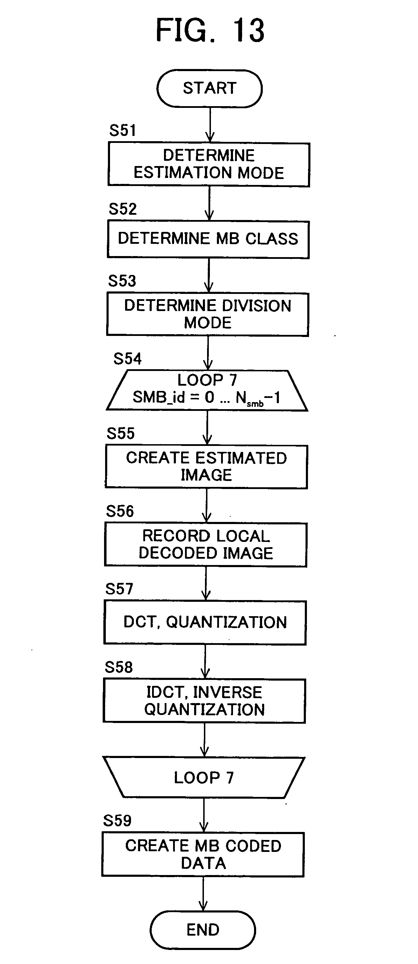

An exemplary operation of the MB coding portion 322 will be described with reference to a flowchart depicted in Fig. 13.
The estimation mode determining portion 148 derives the estimation mode 110 based on the MB images 101 that are externally input, and outputs the estimation mode 110 to the estimating portion 141, the division mode determining portion 349, and the VLC portion 344 (step S51).
The MB class determining portion 350 derives the MB class 301 based on the MB images 101 that are externally input, and outputs the MB class 301 to the division mode determining portion 349 and the VLC portion 344 (step S52).

The division mode determining portion 349 determines the division mode 111 based on the estimation mode 110 input from the estimation mode determining portion 148 at step S51, the MB class 301 input from the MB class determining portion 350 at step S52, and the SMB division rule 102a that is externally input, and outputs the division mode 111 to the SMB dividing portion 140 (step S53).

The SMB dividing portion 140 divides the MB images 101 that are externally input, into the Nsmb pieces of SMB images based on the division mode 111 input from the division mode determining portion 349 at step S52, and sequentially outputs the total of Nsmb pieces of SMB images 105 that are acquired as the result of the division and that each are identified by the identifier SMB_id (SMB_id=0, ..., Nsmb-1) to the estimating portion 141 and the DCT portion 142. Processes of steps S55 to S58 are sequentially executed for each of the SMB images 105 (step S54).

The estimating portion 141 creates and outputs the estimated images 106 using the local decoded images recorded on the local decoded image memory 147 based on the estimation mode 110 input from the estimation mode determining portion 148 at step S51 (step S55).

The estimation residual differences 107 that are the difference between the SMB image 105 output from the SMB dividing portion 140 at step S54 and the estimated image 106 output at step S55 are input into the DCT portion 142. The estimation residual differences 107 are transformed into transformation coefficients by frequency transformation in the DCT portion 142 and, thereafter, the transformation coefficients are quantized in the quantizing portion 143 and are output as the transformation coefficient levels 108 to the VLC portion 344 and the inverse quantizing portion 145 (step S56).

The transformation coefficient levels 108 output at step S56 are inverse-quantized and, thereby, restored as the transformation coefficients in the inverse quantizing portion 145 and, thereafter, are restored and output as the estimation residual differences 107 by inverse frequency transformation in the IDCT portion 146 (step S57).

The estimation residual differences 107 output at step S57 are added to the estimated images 106 output from the estimating portion 141 at step S55, and are recorded on the local decoded image memory 147 as the local decoded images 109 (step S58).

The VLC portion 344 performs variable-length-coding on the estimation mode 110 input from the estimation mode determining portion 148 at step S51, the MB class 301 input from the MB class determining portion 350 at step S52, and the transformation coefficient levels 108 of the SMBs input from the quantizing portion 143 at step S56, and externally outputs the coded result as the MB coded data 103a (step S59).

According to the above procedure, the MB coding portion 322 can code the MB images 101 input and, thereby, create the MB coded data 103a. At this time, the estimation mode that is suitable for the property of the MB images 101 is selected and the MB class that represents the property of each of the MB images 101 is derived. The division mode is determined that is suitable for the estimation mode selected for the MB images each having the property represented by the MB class based on the SMB division rule 102a separately input.

In the case where the MB class is different, even when the same estimation mode is used, the property of the estimation residual difference is different. Therefore, the division mode that is most suitable for a specific estimation mode differs depending on the MB class. Therefore, it becomes possible to select a more suitable division mode by changing the division mode to be correlated with each estimation mode depending on the MB class. Thereby, the energy of the estimation residual differences can be concentrated on fewer transformation coefficients.

<Exemplary Configuration of SMB Division Rule Creating Portion 320>

The detailed configuration of the SMB division rule creating portion 320 included in the image encoder 3 will be described.

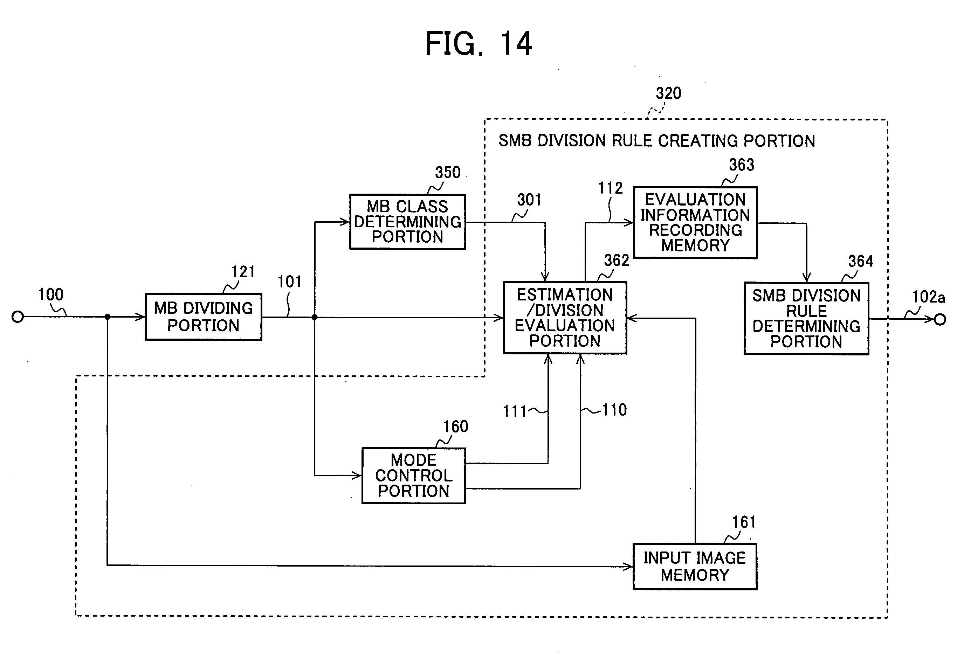

Fig. 14 is a block diagram of an exemplary configuration of the SMB division rule creating portion 320. The SMB division rule creating portion 320 is configured by the mode control portion 160, the input image memory 161, an estimation/ division evaluating portion 362, an evaluation information recording memory 363, and an SMB division rule determining portion 364. The MB dividing portion 121 is the same as that depicted in Fig. 1 and the MB class determining portion 350 is the same as that depicted in Fig. 12. The components other than the estimation/division evaluating portion 362, the evaluation information recording memory 363, and the SMB division rule determining portion 364 have the same functions as those of the corresponding components in the SMB division rule creating portion 120 (Fig. 6) or the MB coding portion 322 (Fig. 12), therefore, are given the same reference numerals, and will not again be described.

<Description of Estimation/Division Evaluating Portion 362>

The estimation/division evaluating portion 362 calculates the mode evaluation value 112 that represents the degree of properness of the division mode 111 for the estimation mode 110, based on the MB images 101 input from the MB dividing portion 121, the estimation mode 110 input from the mode control portion 160, and the division mode 111. The definition of and the procedure for deriving the mode evaluation value are the same as those of the estimation/ division evaluating portion 162 (Fig. 6) and, therefore, will not again be described. The mode evaluation value 112 is output after being correlated with the estimation mode 110, the division mode 111, and the MB class 301 that is separately input.

<Description of Evaluation Information Recording Memory 363>

The evaluation information recording memory 363 has sequentially recorded thereon the mode evaluation values 112 that are input from the estimation/division evaluating portion 363 and that each are correlated with the estimation mode 110, the division mode 111, and the MB class 301.

<Description of SMB Division Rule Determining Portion 364>

The SMB division rule determining portion 364 refers to the mode evaluation values 112 that are recorded on the evaluation information recording memory 363, and creates and outputs the SMB division rule 102a. In the SMB division rule 102a, an effective division mode is correlated to each of all applicable estimation modes for each MB class. The SMB division rule 102a is created according to the following procedure.

The SMB division rule determining portion 364 calculates the evaluation value of each division mode for an estimation mode PM for a specific MB class, based on the mode evaluation value 112 recorded on the evaluation information recording memory 363. For example, as to the evaluation value of a division mode DM for an estimation mode PM in an MB class MC: the mode evaluation values 112 that are correlated with the MB class MC, the estimation mode PM, and the division mode DM are all obtained and the average value of the plurality of mode evaluation values obtained is determined as the evaluation value. Thereby, a combination evaluation value can be obtained for an arbitrary combination of the MB class, the estimation mode, and the division mode.

A division mode is selected that causes the above combination evaluation value to be minimal for the estimation mode PM for each MB class and this division mode is determined as the division mode that is suitable for the estimation mode PM. Thereby, a division mode is selected that is suitable for each estimation mode for each MB class.

<Exemplary Operation of SMB Division Rule Creating Portion 320>

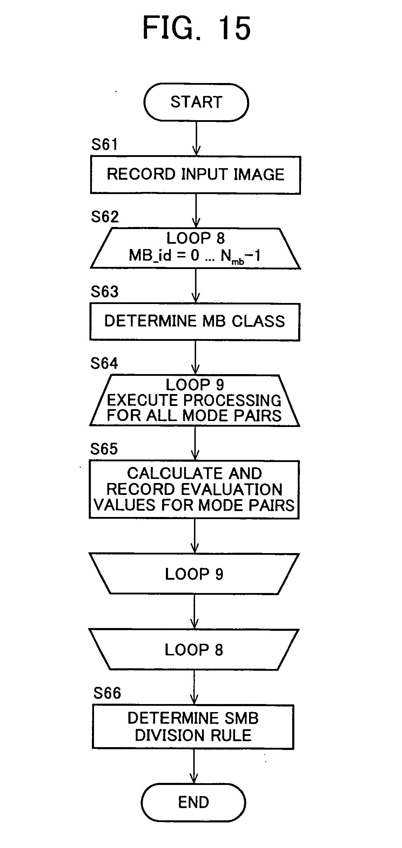

An exemplary operation of the SMB division rule creating portion 320 will be described with reference to a flowchart depicted in Fig. 15.
The SMB division rule creating portion 320 records the input image 100 that is input from outside, on the input image memory 161 (step S61).
The MB dividing portion 121 divides the input image 100 that is input from outside, into the MB images 101, and sequentially outputs the total of Nmb MB images that are acquired as the result of the division and that each are identified by the identifier MB_id (MB_id=0, ..., Nmb-1) to the SMB dividing portion 140 (Fig. 12), the estimation/division evaluating portion 362, the mode control portion 160, and the MB class determining portion 350. Processes of steps S63 to S65 are executed for each of the MB images (step S62).

The MB class determining portion 350 derives the MB class 301 based on the MB images 101 input from the MB dividing portion 121 at step S62, and outputs the MB class 301 to the estimation/division evaluating portion 362 (step S63).

The mode control portion 160 creates pairs (mode pairs) of the estimation mode 110 and the division mode 111, and sequentially outputs these pairs to the estimation/division evaluating portion 362. A process of step S65 is executed for the pairs each of the estimation mode 110 and the division mode 111 (step S64).

The estimation/division evaluating portion 362 calculates the mode evaluation value 112 for the MB image input from the MB dividing portion 121 at step S62, the MB class 301 input from the MB class determining portion 350 at step S63, and each of the pairs each of the estimation mode 110 and the division mode 111 input from the mode control portion 160 at step S64, and records the mode evaluation value 112 on the evaluation information recording memory 363 (step S65).

The SMB division rule determining portion 364 creates one SMB division rule 102a based on each mode evaluation value 112 recorded on the evaluation information recording memory 363 at step S65, and outputs the SMB division rule 102a to outside (step S66) .

According to the above procedure, the SMB division rule creating portion 320 determines the SMB division rule 102a based on the input image 100 that is input from outside, and outputs the SMB division rule 102a. At this time, when DCT is applied to the estimation residual differences of the SMBs in the MB images that have the property represented by the MB classes, the division mode that causes the energy of the estimation residual differences to concentrate on a few transformation coefficients is correlated with each estimation mode.

<Configuration and Operation of Decoder>

An image decoder that decodes the pieces of coded data 103a that are coded by the image encoder 3 and that, thereby, reproduces an image will be described.
The image decoder will be described with reference to Fig. 8 whose image decoder 2 is replaced by an image decoder 4, and components of the image decoder 4 are depicted in brackets of Fig. 8. The image decoder 4 has a configuration of the image decoder 2 with a coded data decomposing portion 420 replacing the coded data decomposing portion 220 and an MB decoding portion 421 replacing the MB decoding portion 221.

The coded data decomposing portion 420 extracts the SMB division rule 102a and the plural pieces of MB coded data 103a from the coded data 104a input, and outputs these to the MB decoding portion 421.

The MB decoding portion 421 creates the MB decoded images 200 based on the SMB division rule 102a and the pieces of MB coded data 103a that are input from the coded data decomposing portion 420, and outputs the MB decoded images 200 to the MB coupling portion 222. The details of the process of the MB decoding portion 421 will be described later.

An exemplary operation of the image decoder 4 is same as the exemplary operation described at steps S31 to S34 (Fig. 9) of the image decoder 2 and, therefore, will not again be described.

<Exemplary Configuration of MB Decoding Portion 421>

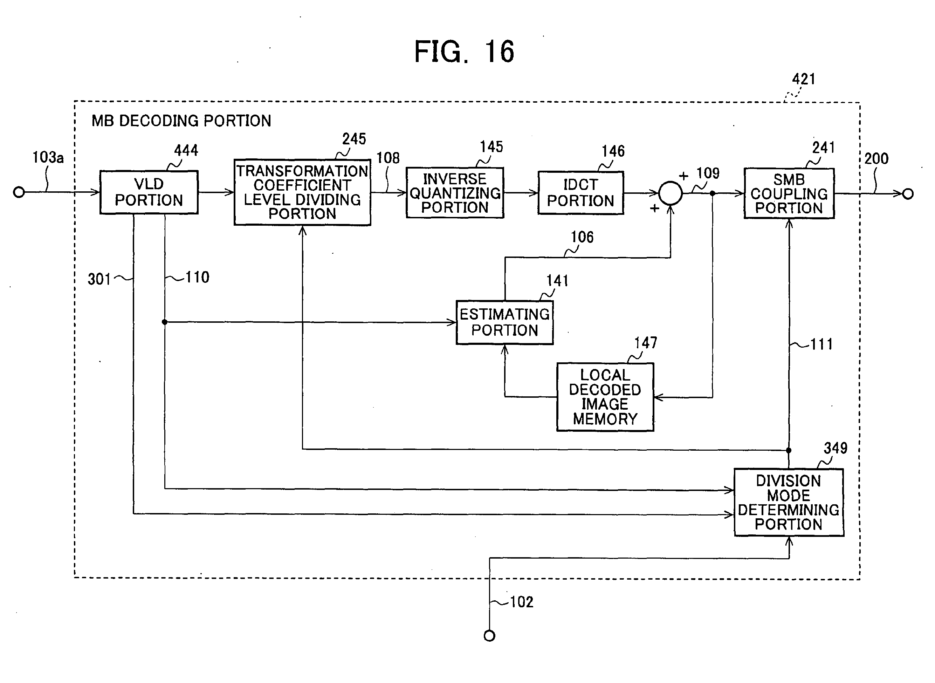

The detailed configuration of the MB decoding portion 421 included in the image decoder 4 will be described. Fig. 16 is a block diagram of an exemplary configuration of the MB decoding portion 421. The MB decoding portion 421 is configured by the estimating portion 141, the IDCT portion 146, the local decoded image memory 147, the division mode determining portion 349, the SMB coupling portion 241, and a VLD portion 444. These components other than the VLD portion 444 have the same functions as those of the corresponding components in the MB decoding portion 221 of Fig. 10 and the MB coding portion 322 of Fig. 12, therefore, are given the same reference numerals, and will not again be described.

The VLD portion 444 extracts the estimation mode 110, the MB class 301, and the transformation coefficient level from the MB coded data 103a input, and outputs the extracted data.

<Exemplary Operation of MB Decoding Portion 421>

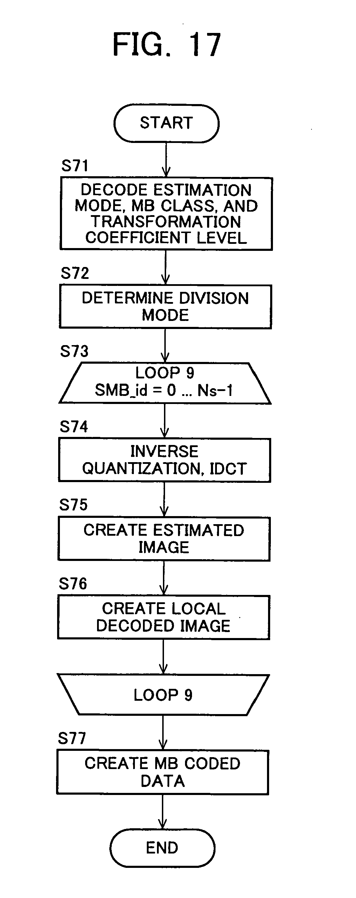

An exemplary operation of the MB decoding portion 421 will be described with reference to a flowchart depicted in Fig. 17.
The MB coded data 103a is input from outside and is supplied to the VLD portion 444. The VLD portion 444 decodes the transformation coefficient level, the estimation mode 110, and the MB class 301 from the MB coded data 103a, and outputs: the estimation mode 110 to the estimating portion 141 and the division mode determining portion 349; the MB class 301 to the division mode determining portion 349; and the transformation coefficient level to the transformation coefficient level dividing portion 245 (step S71).

The division mode determining portion 349 determines the division mode 111 based on the estimation mode 110 and the MB class 301 that are input from the VLD portion 444 at step S71 and the SMB division rule 102a that is input from outside, and outputs the division mode 111 to the transformation coefficient level dividing portion 245 and the SMB coupling portion 241 (step S72).

The transformation coefficient level dividing portion 245 divides the transformation coefficient level input from the VLD portion 444 at step S71 into the transformation coefficient levels 108 for each SMB based on the division mode 111 input from the division mode determining portion 349 at step S72, and sequentially outputs the transformation coefficient levels 108 to the inverse quantizing portion 145. Processes of steps S74 to S76 are executed for each of the transformation coefficient levels that correspond to the total of Nsmb SMB that each are identified by the identifier SMB_id (SMB_id=0, ..., Nsmb-1) (step S73).

Inverse quantization is applied to the transformation coefficient levels 108 input into the inverse quantizing portion 145 at step S73, and the transformation coefficient levels 108 are output to the IDCT portion 146 as the transformation coefficients. The IDCT portion 146 applies inverse discrete cosine transformation to the transformation coefficients input, and outputs the estimation residual differences created thereby (step S74).

The estimating portion 141 creates the estimated images 106 using the local decoded images recorded on the local decoded image memory 147 based on the estimation mode 110 input from the VLD portion 444 at step S71, and outputs the estimated images 106 (step S75).

The images formed by adding the estimation residual differences output from the IDCT portion 146 at step S74 to the estimated images 106 output from the estimating portion 141 at step S75 are recorded on the local decoded image memory 147 as the local decoded images 109, and is output to the SMB coupling portion 241 (step S76).

The SMB coupling portion 241 couples the local decoded images 109 sequentially input at step S76 based on the division mode 111 input from the division mode determining portion 349 at step S72, and externally outputs the coupling result as the MB decoded images 200 (step S77).

According to the above procedure, the MB decoding portion 421 can decode the pieces of MB coded data 103a sequentially input, based on the SMB division rule 102a input and, sequentially output the corresponding MB decoded images.

As above, according to the image decoder 4, a decoded image can be created from the coded data that is created by the image encoder 3.

EXPLANATIONS OF LETTERS OR NUMERALS

1, 3...image encoder, 2, 4...image decoder, 100...input image, 101...MB image, 102, 102a...SMB division rule, 103, 103a...MB coded data, 104, 104a...coded data, 105...SMB image, 106...estimated image, 107...estimation residual difference, 108...transformation coefficient level, 109...local decoded image, 110...estimation mode, 111...division mode, 112...mode evaluation value, 113 ... information indicating a division mode, 120, 320...SMB division rule creating portion, 121...MB dividing portion, 122, 322...MB coding portion, 123, 323...coded data multiplexing portion, 140...SMB dividing portion, 141...estimating portion, 142...DCT portion, 143...quantizing portion, 144, 344...VLC portion, 145...inverse quantizing portion, 146...IDCT portion, 147...local decoded image memory, 148...estimation mode determining portion, 149, 349...division mode determining portion, 160...mode control portion, 161...input image memory, 162, 362...estimation/division evaluating portion, 163, 363...evaluation information recording memory, 164, 364...SMB division rule determining portion, 200...MB decoded image, 201...decoded image, 220, 420... coded data decomposing portion, 221, 421...MB decoding portion, 222...MB coupling portion, 241...SMB coupling portion, 244, 444...VLD portion, 245...transformation coefficient level dividing portion, 301...MB class, 350...MB class determining portion.

**Claims**

1. An image encoder that divides an input image into a plurality of macro blocks and executes a coding process for each macro block, comprising:

   an estimation mode determining portion that determines an estimation mode indicating a method for creating an estimated image for each macro block;
   a division mode determining portion that determines a division mode indicating a method for dividing into sub-macro blocks for each macro blocks corresponding to the estimation mode determined by the estimation mode determining portion;
   an SMB dividing portion that divides a macro block into sub-macro blocks based on the division mode determined by the division mode determining portion; and
   an estimating portion that creates an estimated image of a macro block based on the estimation mode determined by the estimation mode determining portion, wherein
   a difference between the input image and the estimated image is frequency-transformed for each sub-macro block.

2. The image encoder as defined in claim 1, wherein
   the estimating portion creates the estimated image of the macro block for each sub-macro block.

3. The image encoder as defined in claim 1 or 2, comprising
   an SMB division rule creating portion that creates an SMB division rule correlating each estimation mode with a suitable division mode, wherein
   the division mode determining portion determines a division mode that corresponds to the estimation mode determined by the estimation mode determining portion, according to the SMB division rule.

4. The image encoder as defined in claim 3, wherein
   the SMB division rule is encoded.

5. The image encoder as defined in claim 4, wherein
   the SMB division rule is encoded for each slice.

6. The image encoder as defined in any one of claims 3 to 5, further comprising
   a VLC portion that codes the input image for each macro block, wherein
   the SMB division rule includes an effective division mode list that corresponds to each estimation mode,
   the effective division mode list includes as its element(s) at least one or more division mode(s) that is(are) effective for the corresponding estimation mode,
   the division mode determining portion extracts from the SMB division rule the effective division mode list that corresponds to an estimation mode used for creating the estimated image of the macro block, and selects a division mode in the macro block from the division mode(s) included as the element(s) in the effective division mode list, and
   the VLC portion codes information that indicates the division mode selected by the division mode determining portion.

**7.** The image encoder as defined in any one of claims 3 to 6, further comprising
an MB class determining portion that calculates an MB class, the MB class indicating a degree of complication of a macro block, wherein
the division mode determining portion determines a division mode corresponding to the estimation mode determined by the estimation mode determining portion, according to the SMB division rule and the MB class.

**8.** The image encoder as defined in any one of claims 1 to 7, wherein
the division mode includes a laterally-elongated rectangle division mode that designates to divide including laterally-elongated rectangular sub-macro blocks, and a longitudinally-elongated rectangle division mode that designates to divide including longitudinally-elongated rectangular sub-macro blocks.

**9.** An image decoder that creates a decoded image by decoding coded data that is encoded for each macro block, comprising:

a VLD portion that extracts and variable-length-decodes transformation coefficient levels and an estimation mode from the coded data;
an inverse quantizing portion that restores transformation coefficients by inversely quantizing the transformation coefficient levels that are extracted by the VLD portion;
an IDCT portion that restores estimation residual differences by inversely frequency-transforming the transformation coefficients restored by the inverse quantizing portion; and
an estimating portion that creates an estimated image corresponding to sub-macro blocks based on the estimation mode extracted by the VLD portion, wherein
the image decoder creates the decoded image for each macro block by coupling a plurality of local decoded images acquired by adding the estimation residual differences to the estimated image for each sub-macro block, based on a division mode determined corresponding to the estimation mode.

# FIG. 1

1(3)

IMAGE ENCODER

100

121

MB DIVIDING PORTION

101

122(322)

MB CODING PORTION

123(323)

CODED DATA MULTIPLEXING PORTION

104(104a)

101

120(320)

SMB DIVISION RULE CREATING PORTION

102(102a)

103(103a)

# FIG. 2

START

S1 — INPUT IMAGE

S2 — DETERMINE SMB DIVISION RULE

S3 — LOOP 1
$MB\_id = 0 \ldots N_{mb}-1$

S4 — MB CODING

LOOP 1

S5 — CREATE CODED DATA

END

# FIG. 3

MB CODING PORTION ~122

101

SMB DIVIDING PORTION 140 — 105

107 + −

DCT PORTION 142

QUANTIZING PORTION 143 — 108

VLD PORTION 144 — 103

~111

INVERSE QUANTIZING PORTION 145

ESTIMATION MODE DETERMINING PORTION 148

110

ESTIMATING PORTION 141

106

IDCT PORTION 146

107 +

149(149b)

DIVISION MODE DETERMINING PORTION

LOCAL DECODED IMAGE MEMORY 147

+ ~109

~110

113

~102(102b)

EP 2 373 034 A1

# FIG. 4

(A)

16 × 16 DIVISION

(B)

8 × 8 DIVISION

(C)

4 × 4 DIVISION

(D)

4 × 16 DIVISION

(E)

16 × 4 DIVISION

# FIG. 5

START

S11 → DETERMINE ESTIMATION MODE

S12 → DETERMINE DIVISION MODE

S13 → LOOP 2
SMB_id = 0 ... $N_{smb}-1$

S14 → CREATE ESTIMATED IMAGE

S15 → DCT, QUANTIZATION

S16 → IDCT, INVERSE QUANTIZATION

S17 → RECORD LOCAL DECODED IMAGES

LOOP 2

S18 → CREATE MB CODED DATA

END

# FIG. 6

EP 2 373 034 A1

# FIG. 7

START

S21
RECORD INPUT IMAGE

S22
LOOP 3
MB_id = 0 ... $N_{mb}-1$

S23
LOOP 4
EXECUTE PROCESSING
FOR ALL MODE PAIRS

S24
CALCULATE AND
RECORD EVALUATION
VALUES FOR MODE PAIRS

LOOP 4

LOOP 3

S25
DETERMINE SMB
DIVISION RULE

END

# FIG. 8

2(4)

IMAGE DECODER

104(104a)

220(420)

CODED DATA
DECOMPOSING
PORTION

103(103a)

221(421)

MB
DECODING
PORTION

200

222

MB
COUPLING
PORTION

201

102(102a)

# FIG. 9

START

S31

INPUT CODED DATA

S32

LOOP 5
MB_id = 0 ... Nm−1

S33

MB DECODING

LOOP 5

S34

CREATE DECODED
IMAGE

END

# FIG. 10

EP 2 373 034 A1

# FIG. 11

START

S41
DECODE ESTIMATION
MODE AND
TRANSFORMATION
COEFFICIENT LEVELS

S42
DETERMINE DIVISION
MODE

S43
LOOP 6
SMB_id = 0 ... Ns-1

S44
INVERSE
QUANTIZATION, IDCT

S45
CREATE ESTIMATED
IMAGE

S46
CREATE LOCAL
DECODED IMAGE

LOOP 6

S47
CREATE MB DECODED
IMAGE

END

## FIG. 12

EP 2 373 034 A1

# FIG. 13

START

S51 DETERMINE ESTIMATION MODE

S52 DETERMINE MB CLASS

S53 DETERMINE DIVISION MODE

S54 LOOP 7
SMB_id = 0 ... $N_{smb}-1$

S55 CREATE ESTIMATED IMAGE

S56 RECORD LOCAL DECODED IMAGE

S57 DCT, QUANTIZATION

S58 IDCT, INVERSE QUANTIZATION

LOOP 7

S59 CREATE MB CODED DATA

END

# FIG. 14

EP 2 373 034 A1

# FIG. 15

```
                    ( START )
S61                     │
        ┌───────────────▼───────────────┐
        │      RECORD INPUT IMAGE        │
        └───────────────┬───────────────┘
S62                     │
         ╱──────────────▼──────────────╲
        ╱          LOOP 8               ╲
       ╱     MB_id = 0 ... $N_{mb}-1$    ╲
S63                     │
        ┌───────────────▼───────────────┐
        │       DETERMINE MB CLASS       │
        └───────────────┬───────────────┘
S64                     │
         ╱──────────────▼──────────────╲
        ╱          LOOP 9               ╲
       ╱     EXECUTE PROCESSING          ╲
      ╱      FOR ALL MODE PAIRS           ╲
S65                     │
        ┌───────────────▼───────────────┐
        │       CALCULATE AND            │
        │    RECORD EVALUATION           │
        │  VALUES FOR MODE PAIRS         │
        └───────────────┬───────────────┘
                        │
        ╲───────────────▼───────────────╱
         ╲          LOOP 9              ╱
                        │
        ╲───────────────▼───────────────╱
         ╲          LOOP 8              ╱
S66                     │
        ┌───────────────▼───────────────┐
        │       DETERMINE SMB            │
        │       DIVISION RULE            │
        └───────────────┬───────────────┘
                        │
                    (  END  )
```

# FIG. 16

MB DECODING PORTION — 421

103a → VLD PORTION (444) → TRANSFORMATION COEFFICIENT LEVEL DIVIDING PORTION (245) → 108 → INVERSE QUANTIZING PORTION (145) → IDCT PORTION (146) → 109 → SMB COUPLING PORTION (241) → 200

301, 110 → ESTIMATING PORTION (141) ← 106

LOCAL DECODED IMAGE MEMORY (147)

111

DIVISION MODE DETERMINING PORTION (349)

102

EP 2 373 034 A1

# FIG. 17

START

S71
DECODE ESTIMATION MODE, MB CLASS, AND TRANSFORMATION COEFFICIENT LEVEL

S72
DETERMINE DIVISION MODE

S73
LOOP 9
SMB_id = 0 ... Ns−1

S74
INVERSE QUANTIZATION, IDCT

S75
CREATE ESTIMATED IMAGE

S76
CREATE LOCAL DECODED IMAGE

LOOP 9

S77
CREATE MB CODED DATA

END

# FIG. 18

EP 2 373 034 A1

# FIG. 19

| MB TYPE | (A)<br>I16 | (B)<br>I8 | (C)<br>I4 |
|---|---|---|---|
| DIVISION MODE | | | |

COMMON ESTIMATION MODE

| APPLICABLE ESTIMATION MODE | | | |
|---|---|---|---|
| | DC — DC | DC — DC | ↘ — 45 DEGREES |
| | ↓↓↓ — 90 DEGREES | ↓↓↓ — 90 DEGREES | ↘ — 67.5 DEGREES |
| | → — 0 DEGREE | → — 0 DEGREE | ↙ — 135 DEGREES |
| | ↙ — PLANE | ↗ — −22.5 DEGREES | ↘ — 22.5 DEGREES |
| | | | ↙ — 112.5 DEGREES |

EP 2 373 034 A1

International application No.

PCT/JP2009/068458

**INTERNATIONAL SEARCH REPORT**

A.  CLASSIFICATION OF SUBJECT MATTER
*H04N7/32*(2006.01)i

According to International Patent Classification (IPC) or to both national classification and IPC

B.  FIELDS SEARCHED

Minimum documentation searched (classification system followed by classification symbols)
H04N7/32

Documentation searched other than minimum documentation to the extent that such documents are included in the fields searched
Jitsuyo Shinan Koho        1922–1996   Jitsuyo Shinan Toroku Koho   1996–2009
Kokai Jitsuyo Shinan Koho  1971–2009   Toroku Jitsuyo Shinan Koho   1994–2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2005-318468 A  (Nippon Hoso Kyokai), 10 November 2005 (10.11.2005), entire text; all drawings (Family: none) | 1-9 |
| A | JP 2006-324888 A  (Fujitsu Ltd.), 30 November 2006 (30.11.2006), entire text; all drawings (Family: none) | 1-9 |
| A | JP 2008-092150 A  (Canon Inc.), 17 April 2008 (17.04.2008), entire text; all drawings & US 2008/0123904 A1 | 1-9 |

[X]  Further documents are listed in the continuation of Box C.      [ ]  See patent family annex.

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
17 November, 2009 (17.11.09)

Date of mailing of the international search report
24 November, 2009 (24.11.09)

Name and mailing address of the ISA/
Japanese Patent Office

Facsimile No.

Authorized officer

Telephone No.

Form PCT/ISA/210 (second sheet) (April 2007)

41

**INTERNATIONAL SEARCH REPORT**

| International application No. |
| --- |
| PCT/JP2009/068458 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | JP 2008-283402 A　(Canon Inc.),<br>20 November 2008 (20.11.2008),<br>entire text; all drawings<br>(Family: none) | 1-9 |

Form PCT/ISA/210 (continuation of second sheet) (April 2007)